# EUROPEAN PATENT APPLICATION

(11) **EP 4 654 665 A1**
(43) Date of publication of application: **26.11.2025**
(21) Application number: 24756303.4
(22) Date of filing: 08.02.2024
(51) Int. Cl.: H04W 36/00

(54) **CONDITIONAL PRIMARY SECONDARY CELL CHANGE METHOD AND APPARATUS**

(30) Priority: 17.02.2023 CN 202310157032
(71) Applicant: Huawei Technologies Co., Ltd., Shenzhen, Guangdong 518129 (CN)
(72) Inventor: WANG, Fanfan, Shenzhen, Guangdong 518129 (CN); HU, Xingxing, Shenzhen, Guangdong 518129 (CN)
(74) Representative: Pfenning, Meinig & Partner mbB
(86) International application number: PCT/CN2024/076960
(87) International publication number: WO 2024/169931

(57) **Abstract**

This application provides a conditional primary secondary cell change method and apparatus, to resolve a problem that a secondary cell group radio link failure may occur in a scenario of continuous CPC changes. The method includes: UE receives a first RRC reconfiguration message from a network device, where the first RRC reconfiguration message includes first information and second RRC messages that correspond to M candidate PSCells, the second RRC messages include second information corresponding to N candidate PSCells in the M candidate PSCells, and the first information and the second information include at least one of an execution trigger condition and measurement configuration information; the UE evaluates, based on the first information, whether execution trigger conditions of the M candidate PSCells are met; and when the UE determines, through evaluation, that an execution trigger condition of a first candidate PSCell meets the execution trigger condition, the UE applies a second RRC message corresponding to the first candidate PSCell.

## Description

### CROSS-REFERENCE TO RELATED APPLICATIONS

This application claims priority to Chinese Patent Application No. 202310157032.1, filed with the China National Intellectual Property Administration on February 17, 2023 and entitled "CONDITIONAL PRIMARY SECONDARY CELL CHANGE METHOD AND APPARATUS", which is incorporated herein by reference in its entirety.

### TECHNICAL FIELD

This application relates to the field of communication technologies, and in particular, to a conditional primary secondary cell change method and apparatus.

### BACKGROUND

In a 5G communication system, a conditional primary secondary cell (primary secondary cell, PSCell) change (conditional PSCell change, CPC) function may be used to support secondary station mobility of dual connectivity. A primary secondary cell change may be triggered by a primary base station, or may be triggered by a secondary base station. Currently, after successfully performing CPC based on a source PSCell, user equipment (user equipment, UE) may store configuration information of one or more candidate PSCells, to continue to evaluate whether an execution trigger condition of the candidate PSCell is met, and may perform continuous CPC, so that a network side does not need to deliver a CPC configuration to the UE again for continuous CPC. For example, the source PSCell may be a PSCell 0. After CPC is performed based on the PSCell 0, the source PSCell is changed from the PSCell 0 to a PSCell 1. After continuous CPC is performed, the source PSCell is changed from the PSCell 1 to a PSCell 2. After continuous CPC is performed, the source PSCell is changed from the PSCell 2 to a PSCell 3.

When the UE evaluates another candidate cell in the source PSCell 0, an execution trigger condition of the another candidate cell is determined by a trigger node based on the source PSCell 0. After the UE changes from the source PSCell 0 to the PSCell 1, the UE continues to use the execution trigger condition that is of the candidate cell and that is determined by the trigger node, and a problem of a secondary cell group (secondary cell group, SCG) radio link failure (radio link failure, RLF) may occur.

SUMMARY

Embodiments of this application provide a conditional primary secondary cell change method and apparatus, to improve change accuracy and timeliness of continuous CPC, avoid an SCG RLF, and reduce evaluation of whether an execution trigger condition of an invalid neighboring cell is met, so as to save energy.

According to a first aspect, this application provides a CPC method. The method may be applied to UE, a chip, a chip group, a function module that performs the method in a chip, or the like. UE is used as an example. The method includes: The UE receives a first RRC reconfiguration message from a network device, where the first RRC reconfiguration message includes first information and second RRC messages that correspond to M candidate PSCells, M is a positive integer, the second RRC messages include second information corresponding to N candidate PSCells in the M candidate PSCells, and the first information and the second information include one or more of an execution trigger condition and measurement configuration information; the UE evaluates, based on the first information, whether execution trigger conditions of the M candidate PSCells are met; and when the UE determines, through evaluation, that an execution trigger condition of a first candidate PSCell in the M candidate PSCells meets the execution trigger condition, the UE applies a second RRC message corresponding to the first candidate PSCell.

In the method, the first RRC reconfiguration message includes the second RRC message of the candidate PSCell, so that the UE can update an applied CPC configuration in a process of continuous CPC. In this way, in a process of performing continuous CPC, the UE may apply in time one or more of an execution trigger condition and measurement configuration information corresponding to a candidate PSCell corresponding to a newly accessed PSCell. Therefore, according to the method, accuracy and timeliness of continuous CPC can be improved, an SCG RLF caused by an inaccurate CPC configuration can be avoided, and evaluation of whether an execution trigger condition of an invalid neighboring cell is met can be reduced, thereby saving energy.

In a possible design, after the UE applies the second RRC message corresponding to the first candidate PSCell, the method further includes: The UE evaluates, based on the second information, whether execution trigger conditions of the N candidate PSCells are met. In this design, the first RRC reconfiguration message includes the second RRC message of the first candidate PSCell, and execution trigger conditions and measurement configurations that correspond to the N candidate PSCells in the second RRC message may be implemented in a full manner, to avoid increasing a calculation amount of the UE.

In a possible design, after the UE applies the second RRC message corresponding to the first candidate PSCell, the method further includes: The UE determining, based on the first information and the second information, third information corresponding to the N PSCells, where the third information includes one or more of an execution trigger condition and measurement configuration information; and the UE evaluates, based on the third information, whether execution trigger conditions of the N candidate PSCells are met.

In this design, the first RRC reconfiguration message includes the second RRC message of the first candidate PSCell, and execution trigger conditions and measurement configurations that correspond to the N candidate PSCells in the second RRC message may be implemented in an incremental manner, to reduce overheads.

In a possible design, the second RRC message further includes first indication information, where the first indication information indicates the UE not to evaluate, when accessing the first candidate PSCell, whether execution trigger conditions of P candidate PSCells are met, and the M candidate PSCells include the P candidate PSCells.

In this design, based on the indication of the first indication information, the UE can be prevented from evaluating an execution trigger condition of an invalid neighboring cell, and an effective neighboring cell of a PSCell to which the UE is currently accessed can be more accurately evaluated, to save energy.

In a possible design, the first RRC reconfiguration message further includes a reference configuration, and the reference configuration includes a secondary cell group SCG configuration and a master cell group MCG configuration; and the second RRC message further includes SCG configurations corresponding to the N candidate PSCells; and that the UE applies the second RRC message corresponding to the first candidate PSCell includes: The UE obtains, based on the reference configuration and the second RRC message, an MCG configuration and an SCG configuration that correspond to the first candidate PSCell.

In this design, the reference configuration between the network device and the candidate secondary base station and the information indicated by the reference configuration stored by the UE are clarified, so that continuous CPC can be implemented more accurately, and occurrence of SCG RLFs can be reduced.

In a possible design, the second RRC message further includes the MCG configuration corresponding to the first candidate PSCell.

In a possible design, the first information is included in the reference configuration.

According to a second aspect, this application provides a CPC method. The method may be applied to a network device, a chip, a chipset, a function module in a chip that performs the method, or the like. A network device is used as an example. The method includes: The network device determines a first message, or receives a first message from a source secondary base station, where the first message includes identifiers of L candidate PSCells and corresponding first information, and L is a positive integer; the network device sends a second message to at least one candidate secondary base station, where the second message is used to request to add a secondary base station; the network device receives, from the at least one candidate secondary base station, second RRC messages corresponding to M candidate PSCells, where M is a positive integer, the second RRC message includes second information corresponding to N candidate PSCells in the M candidate PSCells; and the network device sends a first RRC reconfiguration message to the UE, where the first RRC reconfiguration message includes first information and the second RRC messages that correspond to the M candidate PSCells, and the first information and the second information include one or more of an execution trigger condition and measurement configuration information. For example, the network device may be a primary base station.

In a possible design, the second message includes the first information corresponding to the L candidate PSCells, and the first information is used by the at least one candidate secondary base station to determine the second information.

In a possible design, the first message includes a first reference configuration, and the first reference configuration includes an SCG configuration.

In a possible design, the second message includes the first reference configuration, and the first reference configuration is an SCG configuration used by the at least one candidate secondary base station to determine the second RRC message.

In a possible design, the second RRC message further includes an MCG configuration.

In a possible design, the first RRC reconfiguration message further includes a reference configuration, the reference configuration includes the first reference configuration and the MCG configuration; and the reference configuration is used by the UE to obtain, based on the second RRC message, an MCG configuration and an SCG configuration that correspond to a first candidate PSCell.

According to a third aspect, this application provides a CPC method. The method may be applied to a candidate secondary base station, a chip, a chip group, a function module that performs the method in a chip, or the like. A candidate secondary base station is used as an example. The method includes: The candidate secondary base station receives a second message from a primary base station, where the second message is used to request to add a secondary base station; and the candidate secondary base station sends a third message to the primary base station, where the third message indicates a second RRC message corresponding to at least one candidate PSCell, the second RRC message includes second information corresponding to N candidate PSCells, and the second information includes one or more of an execution trigger condition and measurement configuration information.

In a possible design, the second message includes first information corresponding to L candidate PSCells, the first information is one or more of an execution trigger condition and measurement configuration information, and the first information is used by the candidate secondary base station to determine the second information.

In a possible design, the second message includes a first reference configuration, the first reference configuration includes an SCG configuration, and the first reference configuration is an SCG configuration used by the candidate secondary base station to determine the second RRC message.

According to a fourth aspect, an embodiment of this application provides a communication apparatus. The apparatus may be a communication device, or may be a chip in a communication device. The communication device may be UE, or may be a network device, for example, a base station. The base station may be a primary base station, or may be a secondary base station. The apparatus may include a processing unit, a transceiver unit, and a receiving unit. It should be understood that the sending unit and the receiving unit herein may alternatively be a transceiver unit. When the apparatus is a communication device, the processing unit may be a processor, and the sending unit and the receiving unit may be a transceiver. The communication device may further include a storage unit, and the storage unit may be a memory. The storage unit is configured to store instructions, and the processing unit executes the instructions stored in the storage unit, so that the UE performs the method according to any one of the first aspect or the possible designs of the first aspect, or the network device performs the method according to any one of the second aspect or the possible designs of the second aspect, or the candidate secondary base station performs the method according to any one of the third aspect or the possible designs of the third aspect. When the apparatus is a chip in a communication device, the processing unit may be a processor, and the sending unit and the receiving unit may be an input/output interface, a pin, a circuit, or the like. The processing unit executes instructions stored in a storage unit, so that the chip performs the method according to any one of the first aspect or the possible designs of the first aspect, or the chip performs the method according to any one of the second aspect or the possible designs of the second aspect, or the chip performs the method according to any one of the third aspect or the possible designs of the third aspect. The storage unit is configured to store instructions. The storage unit may be a storage unit (for example, a register or a cache) in the chip, or may be a storage unit (for example, a read-only memory or a random access memory) that is in the UE and that is located outside the chip.

According to a fifth aspect, an embodiment of this application further provides a computer-readable storage medium. The computer-readable storage medium stores a computer program. When the computer program is run on a computer, the computer is enabled to perform the methods according to the first aspect to the third aspect.

According to sixth aspect, an embodiment of this application further provides a computer program product that includes a program. When the computer program product runs on a computer, the computer is enabled to perform the methods according to the first aspect to the third aspect.

### BRIEF DESCRIPTION OF DRAWINGS

FIG. 1 is a diagram of an architecture of an MR-DC control plane;
FIG. 2a is a schematic flowchart of a basic PSCell addition;
FIG. 2b is a schematic flowchart of a basic PSCell change triggered by an MN;
FIG. 2c is a schematic flowchart of a basic PSCell change triggered by a source SN;
FIG. 3a is a schematic flowchart of CPA;
FIG. 3b is a schematic flowchart of CPC triggered by an MN;
FIG. 3c is a schematic flowchart of CPC triggered by a source SN;
FIG. 4a is a diagram of a network architecture of a communication system to which this application is applicable;
FIG. 4b is a diagram of a network architecture of a (radio) access network device to which this application is applicable;
FIG. 5 is a diagram of a scenario of a communication system to which this application is applicable;
FIG. 6a is a diagram of a scenario of an A3 event according to an embodiment of this application;
FIG. 6b is a diagram of a scenario of an A5 event according to an embodiment of this application;
FIG. 7 is a diagram 1 of an interaction procedure of a CPC method according to an embodiment of this application;
FIG. 8 is an example diagram of a first RRC reconfiguration message according to an embodiment of this application;
FIG. 9 is a diagram 2 of an interaction procedure of a CPC method according to an embodiment of this application;
FIG. 10 is a diagram 3 of an interaction procedure of a CPC method according to an embodiment of this application;
FIG. 11 is a diagram 4 of an interaction procedure of a CPC method according to an embodiment of this application;
FIG. 12 is a diagram of a structure of a communication apparatus according to an embodiment of this application;
FIG. 13 is a diagram of a structure of a base station according to an embodiment of this application; and
FIG. 14 is a diagram of a structure of a terminal device according to an embodiment of this application.

### DESCRIPTION OF EMBODIMENTS

For ease of understanding embodiments of this application, terms or background related to embodiments of this application are described below.

### (1) Multi-radio dual connectivity (multi-radio dual connectivity, MR-DC)

In a wireless network, one UE may communicate with a plurality of base stations. This is referred to as MR-DC (which may also be referred to as "DC"). The plurality of base stations may be base stations belonging to a same radio access technology (radio access technology, RAT), for example, all the base stations are 4th generation (4th generation, 4G) base stations, or all the base stations are 5th generation (5th generation, 5G) base stations; or may be base stations belonging to different RATs, for example, one base station is a 4G base station, and another base station is a 5G base station. A network side may provide a communication service for the UE by using resources of the plurality of base stations to provide high-rate transmission for the UE.

A primary base station (master node, MN) is a base station that exchanges control plane signaling with a core network in the DC. A secondary base station (secondary node, SN) is a base station other than the MN in the DC. Each base station has a different radio link control (radio link control, RLC)/media access control (medium access control, MAC) entity.

In the DC, a type of a data radio bearer (data radio bearer, DRB) is classified into a master cell group (master cell group, MCG) bearer, a secondary cell group (secondary cell group, SCG) bearer, and a split bearer (split bearer). The MCG bearer means that an RLC/MAC entity of the DRB is only on the primary base station, the SCG bearer means that an RLC/MAC entity of the DRB is only on the secondary base station, and the split bearer means that RLC/MAC entities of the DRB are on both the primary base station and the secondary base station. In addition, a bearer whose packet data convergence protocol (packet data convergence protocol, PDCP) is terminated on the MN is referred to as an MN terminated bearer (MN terminated bearer). To be specific, downlink (downlink, DL) data directly arrives at the MN from the core network, is processed by a PDCP or a service data adaptation protocol (service data adaptation protocol, SDAP) of the MN, and then is sent to the UE through RLC and MAC. Uplink (uplink, UL) data is processed by the PDCP or SDAP of the MN and then is sent to the core network. Similarly, a bearer whose PDCP is terminated on the SN is referred to as an SN terminated bearer (SN terminated bearer). To be specific, DL data directly arrives at the SN from the core network, is processed by a PDCP/SDAP of the SN, and then is sent to the UE through RLC/MAC. UL data is processed by the PDCP/SDAP of the SN, and then is sent to the core network.

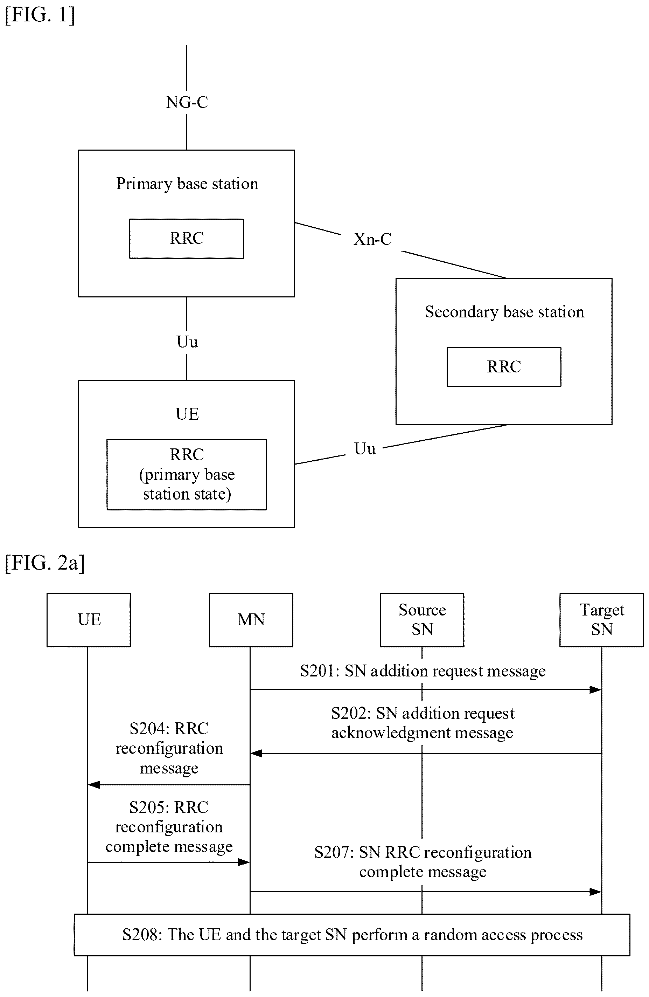

In addition, FIG. 1 is a diagram of an architecture of an MR-DC control plane. It can be learned from FIG. 1 that, in DC, both a primary base station and a secondary base station have radio resource control (radio resource control, RRC) entities, and each may generate an RRC message, where the RRC message may be, for example, a measurement message. In a scenario, the secondary base station may directly send, to UE, the RRC message generated by the secondary base station. In this case, an RRC message sent by the UE to the secondary base station is also directly sent to the secondary base station, and an RRC message directly exchanged between the secondary base station and the UE is referred to as an SRB3. In another scenario, the secondary base station may also notify the primary base station of an RRC message generated by the secondary base station, and then the primary base station sends the RRC message to the UE. In this case, the UE also forwards, through the primary base station to the secondary base station, the RRC message sent to the secondary base station. To be specific, the UE sends the RRC message to the primary base station, and the primary base station forwards the message to the secondary base station. A control plane interface of the primary base station is referred to as an NG-C interface, a control plane interface between the primary base station and the secondary base station is referred to as an Xn-C interface, and an interface between the primary base station and the UE and an interface between the secondary base station and the UE are referred to as a Uu interface.

A DC architecture may include but are not limited to the following four types.

A first type is EN-DC (E-UTRA-NR dual connectivity). A long term evolution (long term evolution, LTE) base station (for example, an eNB) serves as an MN, which is also referred to as an anchor (anchor), and a new radio (new radio, NR) base station (for example, a gNB) serves as an SN, to perform DC. Both the MN and the SN are connected to a 4G core network (evolved packet core, EPC), to provide air interface transmission resources for data between UE and the EPC. The EN-DC is also called non-standalone (non-standalone, NSA) networking. In an initial phase of 5G, in an EN-DC network, the UE cannot camp on an NR cell. An NR base station that can camp on the UE is sometimes referred to as an SA NR base station.

A second type is NE-DC (NR-E-UTRA dual connectivity). An NR base station (for example, a gNB) serves as an MN, and an LTE base station (for example, a ng-eNB) serves as an SN. Both the MN and the SN are connected to a 5G core (5G core, 5GC) network, to provide air interface transmission resources for data between UE and the 5GC.

A third type is NGEN-DC (NG-RAN E-UTRA-NR dual connectivity). To be specific, an LTE base station (for example, a ng-eNB) serves as an MN, and an NR base station (for example, a gNB) serves as an SN to perform DC. Both the MN and the SN are connected to a 5GC, to provide air interface transmission resources for data between UE and the 5GC.

Type 4: in addition to the foregoing three types of LTE-NR DC, 5G further supports NR-NR DC (NR-DC). To be specific, both an MN and an SN are NR base stations, and both a primary base station and a secondary base station are connected to a 5GC.

For UE in the MR-DC, a user plane of the secondary base station may be connected to a core network connected to the primary base station. In other words, the core network may directly send data to the UE through the secondary base station.

### (2) Primary cell (primary cell, PCell) and primary secondary cell (primary secondary cell, PSCell)

In MR-DC, there is one PCell in a primary base station, and there is one PSCell in a secondary base station. The PCell is a cell that is deployed at a dominant frequency and in which UE initiates an initial connection establishment process or a connection reestablishment process, or a cell indicated as a primary cell in a handover process. The PSCell is a cell in which UE initiates a random access procedure on the secondary base station, or a cell in which the UE skips a random access procedure and initiates data transmission in a change process of the secondary base station, or a cell of the secondary base station in which the UE initiates random access in a process of performing synchronous reconfiguration.

Because the UE may simultaneously receive services of a plurality of cells under one base station, a serving cell group provided by an MN for the UE may also be referred to as a master cell group (master cell group, MCG). Similarly, a serving cell group provided by an SN for the UE may be referred to as a secondary cell group (secondary cell group, SCG). The MCG and the SCG each include at least one cell. When there is only one cell in the MCG, the cell is the PCell of the UE. When there is only one cell in the SCG, the cell is the PSCell of the UE. In addition, in NR, to normalize various terms, a PCell and a PSCell are collectively referred to as a special cell (special cell, SPCell). When there are a plurality of cells in the MCG or SCG, a cell other than the SPCell is referred to as an SCell. In this case, carrier aggregation (carrier aggregation, CA) is performed between the SCell and the SPCell in each cell group. The following describes some key terms:

In a CA technology, a plurality of carriers (or referred to as "cells") are configured for single UE to perform data transmission together. In this way, the UE may simultaneously perform uplink and downlink communication by using the plurality of carriers, to support high-speed data transmission and jointly provide a transmission resource for the UE.

A PCell is a cell operating on a primary carrier. UE performs an initial connection setup process or starts a connection reestablishment process in the cell. In a handover process, the cell is indicated as a primary cell.

A PSCell belongs to cells of an SCG, and is a cell in which the UE is indicated to perform random access or initial physical uplink shared channel (physical uplink shared channel, PUSCH) transmission. For example, a random access procedure is omitted in an SCG change procedure.

A SCell is a cell operating on a secondary carrier. Once an RRC connection is established, the secondary cell may be configured to provide additional radio resources. In addition, it should be noted that, in the DC architecture, a cell other than a PCell in the MCG and the SCG may be referred to as an SCell.

Serving cell (serving cell): For UE in an RRC connected mode, if CA/DC is not configured and there is only one serving cell, the serving cell is a PCell; or if CA/DC is configured, a serving cell set includes a PCell and a SCell. Each component carrier (component carrier, CC) corresponds to one independent cell. UE for which the CA/DC is configured is connected to one PCell and a maximum of 31 SCells. The PCell and all the SCells of the UE form a serving cell set of the UE. The serving cell may be a PCell, or may be an SCell.

### (3) Basic PSCell addition/change

When UE is not configured with a PSCell, a network side triggers a PSCell addition. The network side directly indicates a target PSCell to the UE, and the UE adds the target PSCell. It may be understood that, in a scenario in which the network side configures the MR-DC for the UE, the PSCell addition can only be triggered by the MN. For example, FIG. 2a is a schematic flowchart of a basic PSCell addition. The basic PSCell addition may include the following procedure:
S201: An MN sends an SN addition request message to a target SN.
S202: The target SN returns an SN addition request acknowledgment message to the MN. The SN addition request acknowledgment message carries target SCG information configured by the target SN for UE.
S204: The MN sends an RRC reconfiguration message to the UE. The RRC reconfiguration message carries the target SCG information, and is used to deliver an SN or SCG addition indication to the UE.
S205: The UE sends an RRC reconfiguration complete message to the MN.
S207: The MN sends an SN RRC reconfiguration complete message to the target SN.
S208: The UE and the target SN perform a random access procedure. In the random access procedure, the UE may access a target PSCell.

An execution sequence of S207 and S208 is not limited, and may be determined based on implementation of the UE.

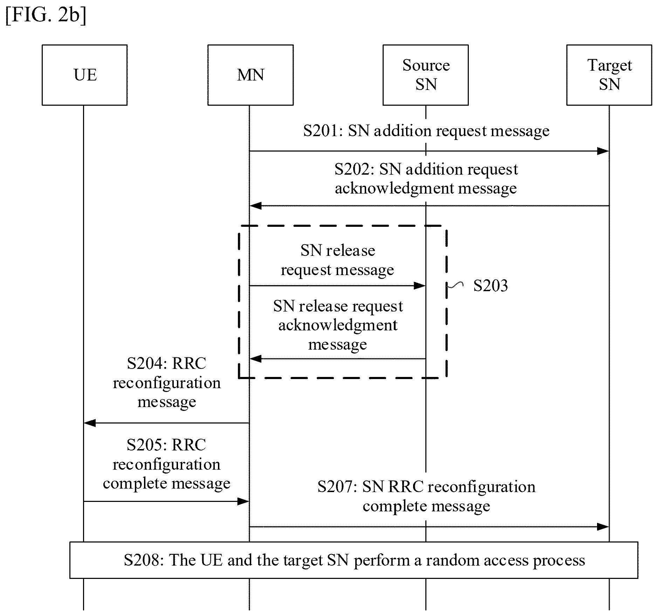

When a PSCell is configured for the UE, due to mobility of the UE, a network side may trigger a PSCell change, which may be triggered by the MN or the SN. The network side directly indicates a target PSCell to the UE, and the UE is handed over from a current PSCell to the target PSCell. For example, FIG. 2b is a schematic flowchart of a basic PSCell change triggered by the MN. In comparison with the procedure shown in FIG. 2a, the basic PSCell change triggered by the MN may further include the following procedure:

After S202, S203a: The MN sends an SN release request message to a source SN. The SN release request message may indicate the source SN to release resources and stop data transmission with the UE.

S203b: The source SN sends an SN release request acknowledgment message to the MN.

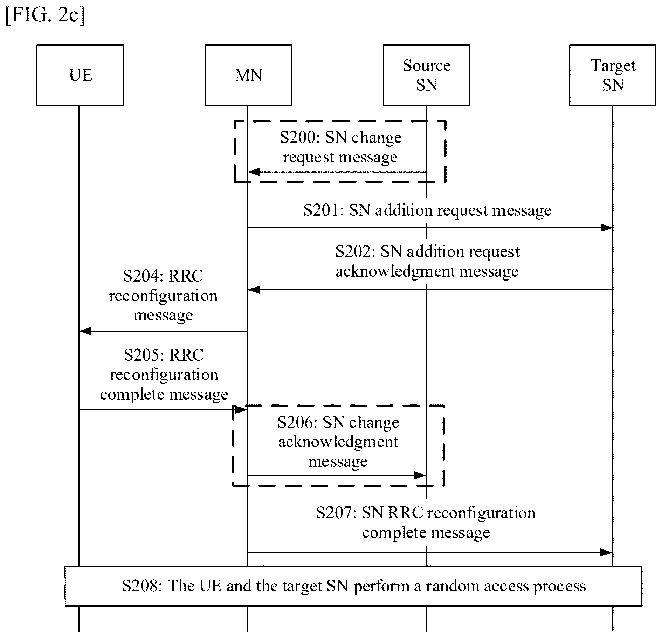

For another example, FIG. 2c is a schematic flowchart of a basic PSCell change triggered by the source SN. In comparison with the procedure shown in FIG. 2a, the basic PSCell change triggered by the source SN may further include the following procedure:

Before S201, S200: The source SN sends an SN change request message to the MN.

After S205, S206: The MN sends an SN change acknowledgment message to the source SN.

### (4) Conditional primary secondary cell addition/change (conditional PSCell addition/change, CPAC)

In CPAC, an MN or an SN prepares a plurality of candidate PSCells, and a network side sends a CPAC configuration to UE. The CPAC configuration includes candidate PSCell information, measurement configuration information, and a handover trigger condition. After receiving the CAPC configuration information, if the UE finds that signal quality of a candidate PSCell meets the handover trigger condition, the UE performs random access by using the candidate PSCell as a target PSCell and performs a PSCell addition or change procedure. The CPAC is different from the basic PSCell addition/change. In the basic PSCell addition/change, the target candidate PSCell is indicated by the network side. In the CPAC, the network side indicates a plurality of candidate PSCells, and the UE determines, through evaluation, a candidate PSCell that meets the trigger condition as the target PSCell.

The CPAC may be classified into a conditional primary secondary cell addition (conditional PSCell addition, CPA) and a conditional primary secondary cell change (conditional PSCell change, CPC), which are described in the following.

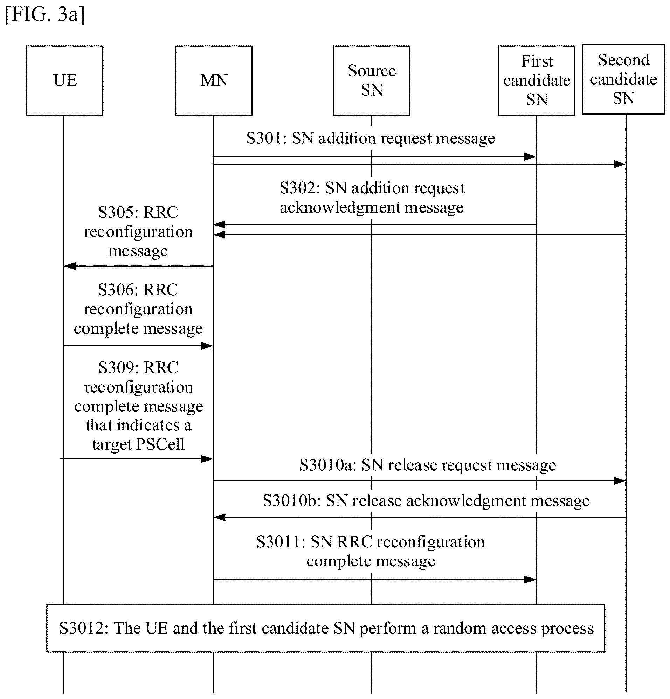

When UE is not configured with a PSCell, a network side triggers a PSCell addition. It may be understood that, in a scenario in which the network side configures the MR-DC for the UE, the PSCell addition can only be triggered by the MN. For example, FIG. 3a is a schematic flowchart of CPA. The CPA may include the following procedure:
S301: An MN sends an SN addition request message to a first candidate SN and a second candidate SN. It should be noted that the first candidate SN and the second candidate SN are used as an example in FIG. 3a. During actual implementation, the MN may send an SN addition request message to one or more candidate SNs. The SN addition request message may include a CPAC configuration, one or more recommended candidate PSCells, and a measurement result, to assist the candidate SN in configuring the SCG Cell(s).

S302: The first candidate SN and the second candidate SN each returns an SN addition request acknowledgment message to the MN. The SN addition request acknowledgment message includes one or more prepared candidate PSCells, and the one or more prepared candidate PSCells are PSCells that are determined by the candidate SN and that allow the UE to access. In addition, the candidate SN reserves a radio resource for the UE until an SN release request message from the MN is received.

S305: The MN sends an RRC reconfiguration message to the UE. The RRC reconfiguration message includes a CPA configuration, and the CPA configuration may indicate a radio air interface configuration and an execution trigger condition of each of the first candidate SN and the second candidate SN.

S306: The UE sends an RRC reconfiguration complete message to the MN. It should be noted that, in this case, the UE does not add a candidate PSCell, and continues to determine whether there is a candidate PSCell that meets the execution trigger condition.

S309: When detecting that a candidate PSCell meets the execution trigger condition, the UE uses the candidate PSCell that meets the execution trigger condition as a target PSCell, and the UE sends the RRC reconfiguration complete message to the MN. It may be understood that the RRC reconfiguration complete message indicates the target PSCell selected by the UE. For example, the target PSCell is a PSCell of the first candidate SN.

S3010a: The MN sends the SN release request message to the second candidate SN. The SN release request message is used to request the SN to release a reserved radio resource, buffered data, and the like. It may be understood that the second candidate SN is another candidate SN except an SN in which the target PSCell is located.

S3010b: The second candidate SN sends an SN release acknowledgment message to the MN.

S3011. The MN sends an SN RRC reconfiguration complete message to the first candidate SN.

S3012. The UE and the first candidate SN perform a random access procedure. In the random access procedure, the UE may access the first candidate PSCell.

An execution sequence of S309 and S3012 is not limited, and may be determined based on implementation of the UE.

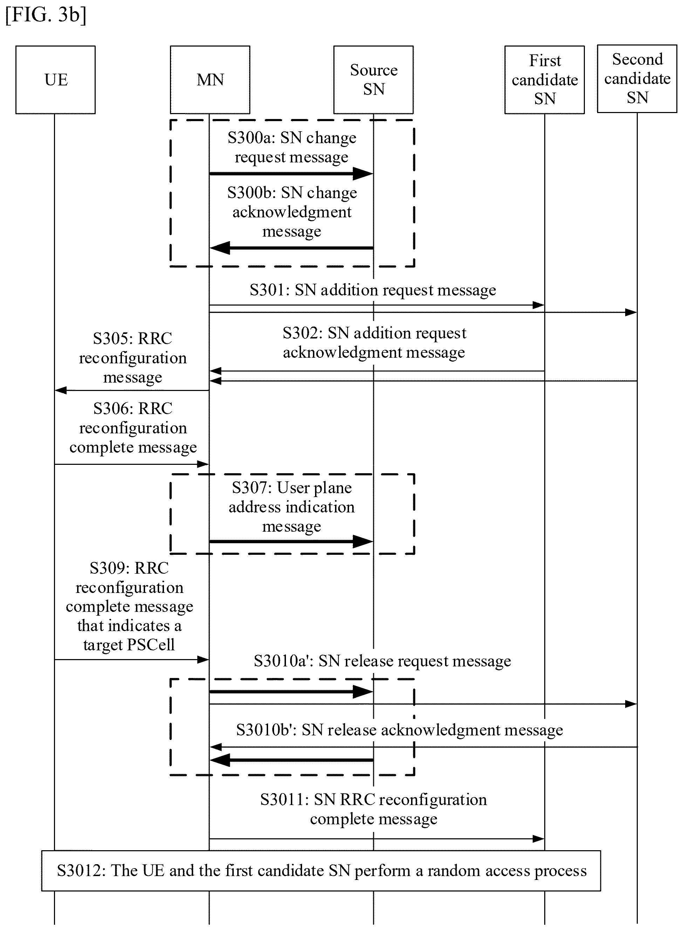

When a PSCell is configured for the UE, due to mobility of the UE, a network side may trigger a PSCell change, which may be triggered by the MN or the source SN. For example, FIG. 3b is a schematic flowchart of CPC triggered by an MN. In comparison with the procedure shown in FIG. 3a, the CPC triggered by the MN may further include the following procedure:

Before S301, S300a: The MN sends an SN change request message to the source SN. Optionally, the SN change request message may be used to request a current SCG configuration. The SCG configuration may be used to implement an incremental configuration on the SCG in CPC.

S300b: The source SN sends an SN change acknowledgment message to the MN. Optionally, the SN change acknowledgment message may include the current SCG configuration.

After S306, S307: The MN sends a user plane address indication message to the source SN. The user plane address indication message is used to perform early data transfer.

In comparison with S3010a, S3010a': The MN further sends the SN release request message to the source SN. The SN release request message is used to request the source SN to stop data transmission with the UE, and perform late data transfer with the SN (for example, the first candidate SN in FIG. 3b) corresponding to the target PSCell.

In comparison with S3010b, S3010b': The source SN further sends the SN release request message to the MN.

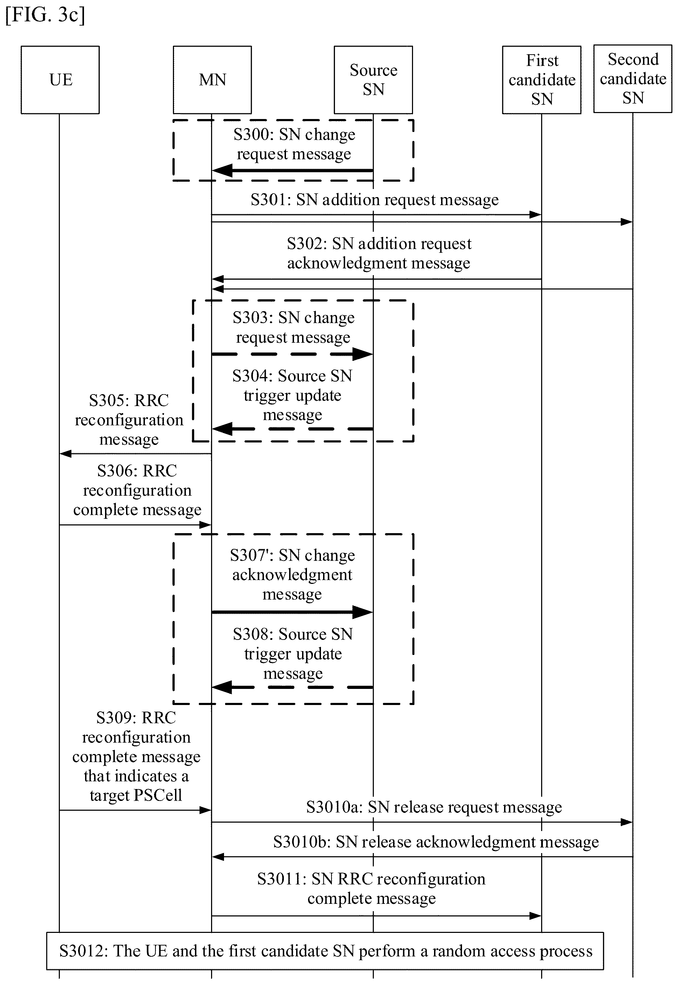

For another example, FIG. 3c is a schematic flowchart of CPC triggered by a source SN. In comparison with the procedure shown in FIG. 3a, the CPC triggered by the source SN may further include the following procedure:

Before S301, S300: The source SN sends an SN change request message to the MN. The SN change request message may include but is not limited to: a CPAC configuration, one or more recommended candidate PSCells, and an SCG configuration, where the CPAC configuration and the one or more recommended candidate PSCells may be used to assist a candidate SN in configuring an SCG Cell(s), and the SCG configuration may be used to implement an incremental configuration on the SCG in the CPC.

Optionally, after S302, S303: The MN sends an SN change request message to the source SN. The SN change request message may indicate a candidate PSCell prepared by the candidate SN, and the prepared candidate PSCell is a PSCell that is determined by the candidate SN and that allows the UE to access.

Optionally, S304: The source SN sends a source SN trigger update message to the MN. The source SN trigger update message may include but is not limited to one or any combination of updated measurement configuration information, an updated execution trigger condition, and the like.

After S306, S307': The MN sends an SN change acknowledgment message to the source SN. The SN change acknowledgment message may indicate that the MN has configured CPC for the UE, to indicate the source SN to perform early data transfer. Optionally, if S303 and S304 are not performed, the SN change acknowledgment message may further indicate a candidate PSCell prepared by the candidate SN. The prepared candidate PSCell is a PSCell that is determined by the candidate SN and that allows the UE to access.

Optionally, S308: The source SN sends a source SN trigger update message to the MN. The source SN trigger update message may include but is not limited to one or any combination of an updated measurement configuration, an updated execution trigger condition, and the like. It may be understood that, after the MN receives the source SN trigger update message sent by the source SN, refer to a manner of implementing reconfiguration for the UE in S305 and S306.

The measurement configuration information in the foregoing example mainly includes a measurement object, a measurement report, and another parameter. For example, the measurement configuration information may be shown in the following Table 1:

**Table 1**

| Content of measurement configuration information | Description |
|---|---|
| Measurement identifier (measurement identities, measurement ID) | The measurement ID combines a measurement object and a reporting configuration as a set. |
| Measurement object (measurement objects) | The measurement object is an object on which UE performs measurement. The measurement object includes frequencies of a synchronization signal block (synchronization signal block, SSB) and a physical broadcast channel block (physical broadcast channel block, PBCH), SSB-based subcarrier spacing, an SSB-based measurement timing configuration (SSB-based measurement timing configuration, SMTC), a whitelisted cell, and a blacklisted cell. |
| Measurement gap (measurement gaps) | The measurement gap is a time period during which UE leaves a current frequency to perform measurement on another frequency, and involved only in inter-frequency measurement and intersystem measurement. |
| Reporting configuration (reporting configurations) | The reporting configuration is a criteria for triggering measurement report reporting, a conditional handover (conditional handover, CHO) event or a CPA event or a CPC event. |
| Triggering quantity (triggering quantity) | The triggering quantity is a strategy for triggering event reporting, including reference signal received power (reference signal received power, RSRP), a received signal strength indicator (received signal strength indicator, RSSI), reference signal received quality (reference signal received quality, RSRQ), and a signal to interference plus noise ratio (signal to interference plus noise ratio, SINR), to indicate signal quality. |

With reference to the content shown in Table 1, it can be learned that the measurement ID is associated with the measurement object and the reporting configuration, and the reporting configuration may include a configuration of the measurement event. It may also be understood that the execution trigger condition mainly refers to a configuration of one or more measurement events. For example, the execution trigger condition of the CPAC may be an A3, A4, A5, or B1 event. For example, the measurement event may be shown in the following Table 2:

**Table 2**

| Event type | Event definition |
|---|---|
| A3 | Signal quality of a neighboring cell is higher than signal quality of a serving cell by an offset |
| A4 | Signal quality of a neighboring cell exceeds a specific threshold |
| A5 | Signal quality of a serving cell drops below a threshold 1 and signal quality of a neighboring cell exceeds a threshold 2 |
| B1 | Signal quality of an inter-RAT neighboring cell exceeds a specific threshold |

It can be seen from the content shown in Table 2 that, after the UE detects that a corresponding measurement event in Table 2 is met through measurement, event reporting may be triggered. For example, the measurement event of the execution trigger condition is the A3 event, and the execution trigger condition is that a PSCell change may be performed when the UE measures that reference signal received power (reference signal received power, RSRP) of a neighboring cell is 3 dB higher than that of a source PSCell. After finding a target PSCell that meets the execution trigger condition in candidate PSCells, the UE may autonomously determine to perform the PSCell change. For another example, the measurement event of the execution trigger condition is the A4 event, and the execution trigger condition is that the UE may perform a PSCell change when the UE measures that signal quality of a candidate PSCell is higher than a threshold. Therefore, when evaluating candidate PSCells, after finding a target PSCell that meets the execution trigger condition, the UE may autonomously determine to perform the PSCell change.

Generally, in a CPA scenario and a CPC scenario triggered by an MN, the execution trigger condition is generally at least one of the A4 and B1 events. For the A4 and B1 events, the signal quality of the candidate PSCell only needs to be greater than the corresponding threshold. In CPC triggered by an SN, the execution trigger condition is generally at least one of the A3 and A5 events. For the A3 and A5 events, the signal quality of the current serving PSCell and the signal quality of the candidate PSCell need to be evaluated at the same time.

It should be noted that, with continuous development of technologies, the terms in embodiments of this application may change, but all of them shall fall within the protection scope of this application.

To make the objectives, technical solutions, and advantages of embodiments of this application clearer, the following further describes embodiments of this application in detail with reference to the accompanying drawings.

The technical solutions in embodiments of this application may be applied to various communication systems, for example, a satellite communication system, a long term evolution (long term evolution, LTE) system, an LTE frequency division duplex (frequency division duplex, FDD) system, an LTE time division duplex (time division duplex, TDD) system, a 5th generation (5th generation, 5G) mobile communication system or a new radio (new radio, NR) system, or a converged communication system of satellite communication and a 5G mobile communication system, or applied to a future communication system or another similar communication system.

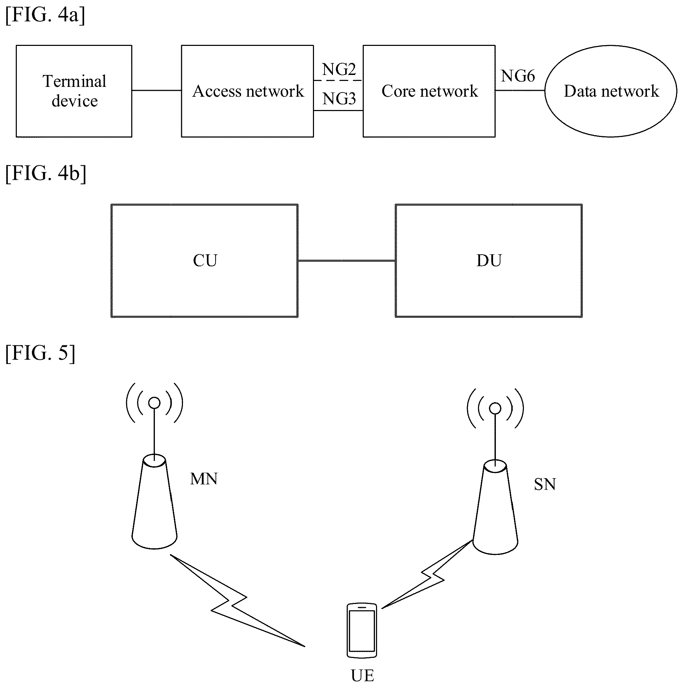

FIG. 4a is a diagram of a network architecture of a communication system to which this application is applicable. According to a requirement of a 3rd generation partnership project (3rd generation partnership project, 3GPP) protocol standard, the network architecture includes four components: UE (user equipment, UE), an access network (access network, AN), a core (core) network, and a data network (data network, DN). The access network may be a radio access network (radio access network, RAN).

The UE, the (radio) access network, and the core network are main parts of the network architecture, and may be logically divided into two parts: a user plane and a control plane. The control plane is responsible for mobile network management, and the user plane is responsible for service data transmission. For example, as shown in FIG. 4a, in a 5G communication system, two next generation (next generation, NG) reference points are located between a (radio) access network control plane and a core network control plane, an NG 3 reference point is located between a (radio) access network user plane and a core network user plane, and an NG 6 reference point is located between the core network user plane and a data network.

The following describes each component of the network architecture in detail.
1. The UE is a device having a wireless transceiver function, and is an entry for a mobile user to interact with a network. The UE can provide a basic computing capability and a storage capability, display a service window to a user, and receive operation input from the user. The UE may communicate with a core network or a data network through a (radio) access network, and exchange voice and/or data with the (radio) access network. For example, in a 5G communication system, next generation UE (nextgen UE, NG UE) may establish a signal connection and a data connection to the (radio) access network by using a new radio (new radio, NR) technology, to perform transmission of a control signal and service data to the network.

For example, the UE may include wireless UE, mobile UE, device to device (device to device, D2D) UE, vehicle to everything (vehicle to everything, V2X) UE, machine-to-machine/machine-type communications (machine-to-machine/machine-type communications, M2M/MTC) UE, internet of things (internet of things, IoT) UE, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), or a user device (user device). For example, the UE may be a mobile phone (mobile phone), a tablet computer (Pad), a computer with a wireless transceiver function, a portable, pocket-sized, handheld, or computer built-in mobile apparatus, or the like. For another example, the UE may alternatively be virtual reality (virtual reality, VR) UE, augmented reality (augmented reality, AR) UE, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), UE in a future-evolved public land mobile network (public land mobile network, PLMN), a vehicle device in V2X, or a customer premises equipment (customer premises equipment, CPE). For another example, the UE may be a device such as a personal communication service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA).

As an example instead of a limitation, the UE may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that is directly worn on a body or integrated into clothes or an accessory of a user. The wearable device is not only a hardware device, but also implements a powerful function through software support, data exchange, and cloud interaction. In a broad sense, wearable intelligent devices include full-featured and large-size devices that can implement complete or partial functions without depending on smartphones, such as smart watches or smart glasses, and devices that dedicated to only one type of application and need to work with other devices such as smartphones, such as various smart bands, smart helmets, or smart jewelry for monitoring physical signs. However, if various UE described above is located on a vehicle (for example, placed in the vehicle or mounted on the vehicle), the UE may be considered as vehicle-mounted UE, and the vehicle-mounted UE is also referred to as, for example, a vehicle-mounted unit (on-board unit, OBU).

The UE may be deployed on land, including an indoor or outdoor device, a handheld device, or a wearable or vehicle-mounted device, may be deployed on a water surface (for example, on a ship), or may be deployed in the air (for example, on an airplane, a balloon, or a satellite). A specific technology, a device form, an application scenario, and a name used by the UE are not limited in embodiments of this application.

2. The (radio) access network is deployed near the UE, provides a network access function for an authorized user in a specific area, and can determine transmission tunnels of different quality based on a user level, a service requirement, and the like, to perform transmission of user data. The (radio) access network can manage and appropriately use resources of the (radio) access network, provide access services for the UE on demand, and forward control signals and service data between the UE and the core network.

A (radio) access network device is deployed in the (radio) access network, and is configured to connect the UE to a wireless network. The (radio) access network device may be generally connected to the core network through a wired link (for example, an optical fiber cable). The (radio) access network device may also be referred to as an RAN device/node, or a base station.

For example, the (radio) access network device may include a base station, an evolved NodeB (evolved NodeB, eNodeB) in an LTE system or an LTE-Advanced (LTE-Advanced, LTE-A) system, a next generation NodeB (next generation NodeB, gNB) in a 5G communication system, a transmission reception point (transmission reception point, TRP), a baseband unit (baseband unit, BBU), an access point (access point, AP) in a wireless local area network (wireless local area network, WLAN), an integrated access and backhaul (integrated access and backhaul, IAB) node, a base station in a future mobile communication system, an access node in a Wi-Fi system, or the like. The radio access network device may alternatively be a module or unit that implements some functions of the base station, for example, a central unit (central unit, CU) or a distributed unit (distributed unit, DU).

For example, in a network structure, the (radio) access network device may be a CU node, a DU node, or a (radio) access network device including the CU node and the DU node. FIG. 4b is a diagram of a network architecture of a (radio) access network device to which this application is applicable. The CU node is configured to support protocols such as a radio resource control (radio resource control, RRC) protocol, a packet data convergence protocol (packet data convergence protocol, PDCP), and a service data adaptation protocol (service data adaptation protocol, SDAP). The DU node is configured to support a radio link control (radio link control, RLC) layer protocol, a medium access control (medium access control, MAC) layer protocol, and a physical layer protocol.

The radio access network device may be deployed on land, including an indoor or outdoor device, a handheld device, or a wearable or vehicle-mounted device, may be deployed on a water surface (for example, on a ship), or may be deployed in the air (for example, on an airplane, a balloon, or a satellite). For example, some gNBs can currently be deployed on satellites. A specific technology, a device form, an application scenario, and a name that are used by the (radio) access network device are not limited in embodiments of this application. In embodiments of this application, the (radio) access network device may be referred to as an access network (AN) device for short. Unless otherwise specified, all access network devices in the following may be (radio) access network devices.

For example, the CPC method provided in embodiments of this application may be applied to the communication system shown in FIG. 5. The communication system may include one UE and two network devices. The UE and the two network devices are in a DC relationship. The two network devices are respectively the MN and the SN described in the foregoing embodiments. In CPC, the SN may perform a change. For a connection architecture of the two network devices, refer to the foregoing four DC architectures. It should be understood that the connection architecture of the two network devices in this application is not limited to the foregoing four DC architectures, and the connection architecture of the two network devices may alternatively be another DC architecture that appears in future communication development. It should be understood that FIG. 5 is merely an example for description, and does not specifically limit a quantity of UE and a quantity of network devices included in the communication system.

3. The core network is responsible for maintaining subscription data of a mobile network, managing a network element of the mobile network, and providing functions such as session management, mobility management, policy management, and security authentication for the UE. Specifically, when the UE is attached, network access authentication is provided for the UE; when the UE has a service request, network resources are allocated to the UE; when the UE moves, network resources are updated for the UE; when the UE is idle, a fast recovery mechanism is provided for the UE; when the UE is detached, network resources are released for the UE; and when the UE has service data, a data routing function is provided for the UE. For example, uplink data is forwarded to a data network, or downlink data is received from a data network and is sent to a (radio) access network, and the data is sent to the UE.

A network element of the core network may be deployed on land, including an indoor or outdoor device, a handheld device, or a wearable or vehicle-mounted device, may be deployed on a water surface (for example, on a ship), or may be deployed in the air (for example, on an airplane, a balloon, or a satellite). For example, in some current scenarios, a user plane function (user plane function, UPF) network element may be deployed on a satellite. A specific technology, a device form, an application scenario, and a name used by the network element of the core network are not limited in embodiments of this application.

4. The data network is configured to provide a service for a user. In an actual communication process, a client is usually located in UE, and a server is usually located in a data network. The data network may be a private network, for example, a local area network, may be an external network that is not managed and controlled by an operator, for example, the Internet (Internet), or may be a dedicated network jointly deployed by operators, for example, a network that provides an IP multimedia network subsystem (IP multimedia core network subsystem, IMS) service.

A network architecture and a service scenario that are described in embodiments of this application are intended to describe the technical solutions in embodiments of this application more clearly, but constitute no limitation on the technical solutions provided in embodiments of this application. A person of ordinary skill in the art may know that, with evolution of the network architecture and emergence of new service scenarios, the technical solutions provided in embodiments of this application are also applicable to similar technical problems.

It should be understood that, in embodiments of this application, "at least one" refers to one or more, and "a plurality of" refers to two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" usually indicates an "or" relationship between the associated objects. "At least one of the following pieces (items)" or a similar expression thereof indicates any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

It should be understood that the terms used in this application are merely for the purpose of describing specific embodiments, and are not intended to limit this application. The terms "a", "the", and "this" of singular forms used in this application and the appended claims are also intended to include plural forms, unless otherwise specified in a context clearly.

In addition, although terms such as first, second, and third may be used in this application to describe various information, the information should not be limited to these terms. These terms are only used to differentiate information of a same type. For example, first information may also be referred to as second information without departing from the scope of this application. Similarly, second information may also be referred to as first information. Depending on the context, for example, words "if" used herein may be explained as "while" or "when" or "in response to determining".

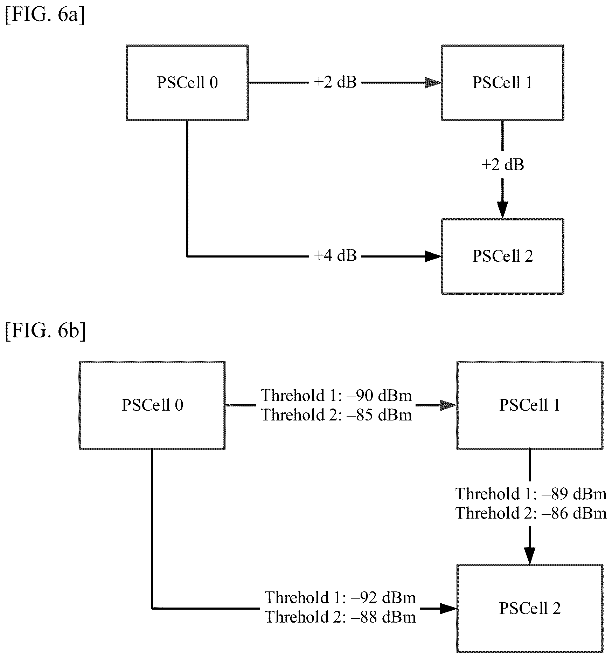

In a DC scenario, procedures such as an SN addition (PSCell addition and the like) procedure/an SN change (including intra-station PSCell modification, inter-station PSCell change, and the like) procedure may be included. The existing standard progress not only achieves a mechanism of conditional execution to support a PSCell addition/change, that is, a CPC mechanism, but also supports continuous CPC. It may be understood that, in continuous CPC, UE may obtain configuration information of one or more candidate PSCells after the UE performs CPC, and the UE may continue to perform measurement based on the configuration information, to continue to perform the CPC. However, in a current communication technology, when the UE evaluates one or more candidate PSCells, an execution trigger condition of the one or more candidate PSCells used is generated based on a source PSCell. After the CPC is performed, although a serving PSCell has changed, the one or more candidate PSCells and the corresponding execution trigger condition are still determined by a trigger node (MN/SN) based on the source PSCell. This may cause some problems. The following uses FIG. 6a and FIG. 6b as examples for description. In a scenario in which a source serving PSCell is a PSCell 0, after the CPC is performed based on the PSCell 0, the serving PSCell is changed from the PSCell 0 to a PSCell 1, and after a subsequent CPC is performed again, the serving PSCell is changed from the PSCell 1 to a PSCell 2. It may be understood that the serving PSCell is a PSCell currently accessed by UE through a random access procedure.

An A3 offset value is used as an example. It can be seen from FIG. 6a that, the A3 offset value of the change from the PSCell 0 to the PSCell 1 is 2 dB (power unit), the A3 offset value of the change from the PSCell 0 to the PSCell 2 is 4 dB, and the A3 offset value of the change from the PSCell 1 to the PSCell 2 is 2 dB. In a current communication technology, a candidate PSCell evaluated by the UE and a corresponding execution trigger condition are both set by a trigger node (SN) based on the PSCell 0, and are used for CPC evaluation from the PSCell 0 to another candidate PSCell. Therefore, after the CPC is performed and the PSCell 0 is changed to the PSCell 1, when the UE still uses a CPC configuration based on the PSCell 0 to evaluate whether the execution trigger condition of the candidate PSCell is met, the PSCell 1 may be changed to the PSCell 2 too late, and a radio link failure may occur.

An A5 threshold is used as an example. It can be seen from FIG. 6b that, for the change from the PSCell 0 to the PSCell 1, a threshold 1 is -90 dBm (power unit), and a threshold 2 is -85 dBm; for the change from the PSCell 0 to the PSCell 2, a threshold 1 is -92 dBm, and a threshold 2 is -88 dBm; and for the change from the PSCell 1 to the PSCell 2, a threshold 1 is -89 Bm, and a threshold 2 is -86 dBm. In a current communication technology, a candidate PSCell evaluated by the UE and a corresponding execution trigger condition are both set by a trigger node (SN) based on the PSCell 0. Therefore, after the CPC is performed and the PSCell 0 is changed to the PSCell 1, when the UE still uses a CPC configuration based on the PSCell 0 to evaluate whether the execution trigger condition of the candidate PSCell is met, the PSCell 1 may be changed to the PSCell 2 too late, too early, or incorrectly, and a radio link failure may occur.

An A4 threshold is used as an example. It can be seen from FIG. 6b that a threshold of the change from the PSCell 0 to the PSCell 1 is -85 dBm, a threshold of the change from the PSCell 0 to the PSCell 2 is -88 dBm, and a threshold of the change from the PSCell 1 to the PSCell 2 is -86 dBm. In a current communication technology, a candidate PSCell evaluated by the UE and a corresponding execution trigger condition are both set by a trigger node (MN) based on the PSCell 0. Therefore, after the CPC is performed and the PSCell 0 is changed to the PSCell 1, when the UE still uses a CPC configuration based on the PSCell 0 to evaluate whether the execution trigger condition of the candidate PSCell is met, the PSCell 1 may be changed to the PSCell 2 too early, and a radio link failure may occur.

It can be seen from the examples described in FIG. 6a and FIG. 6b that, for the A3 event and the A5 event, a candidate PSCell needs to be evaluated, and a serving PSCell that is currently accessed by the UE needs to be evaluated. For continuous CPC triggered by the SN or the MN in the current standard, the RRC reconfiguration message delivered by the network side includes only a candidate PSCell determined based on the PSCell (source PSCell) currently accessed by the UE and a corresponding execution trigger condition. Even if the serving PSCell changes, the UE still uses the CPC configuration based on the source PSCell to evaluate whether the execution trigger condition of the candidate PSCell is met. Therefore, in a scenario in which the UE performs continuous CPC, a radio link failure problem, such as too late change, too late change, or change to wrong cell, described in FIG. 6a or FIG. 6b may occur.

Based on this, embodiments of this application provide a CPC method and apparatus, to resolve a problem that a radio link failure may occur in a scenario of continuous CPC. The method and the apparatus are based on a same inventive concept. Because principles for resolving a problem by using the method and the apparatus are similar, mutual reference may be made between implementations of the apparatus and the method, and repeated descriptions are omitted.

The following specifically describes the CPC method provided in this application with reference to the accompanying drawings.

### Embodiment 1

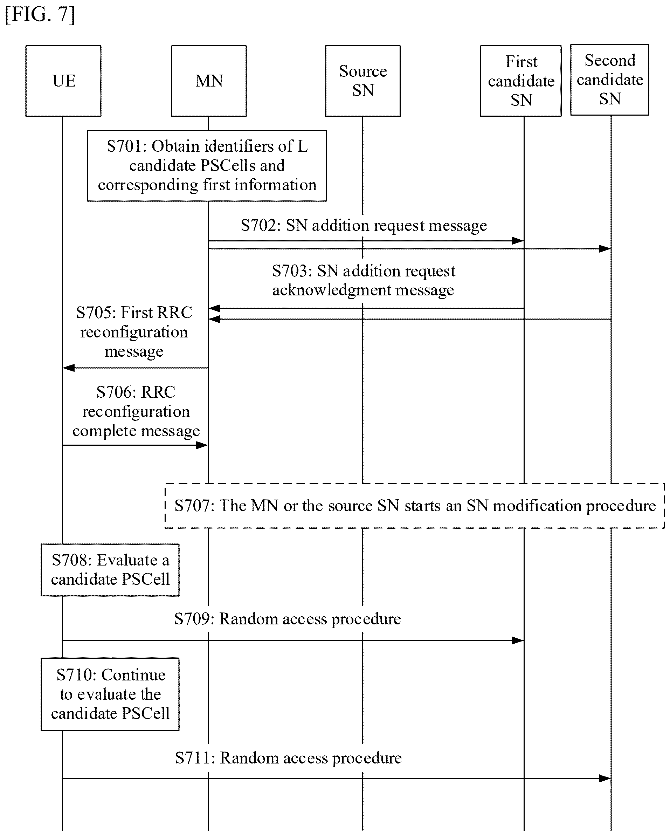

FIG. 7 is a diagram of an interaction procedure of a CPC method according to an embodiment of this application. The method may be applied between UE and a network device, and the method may be applied to a scenario of continuous CPC. The method may include the following detailed steps:
S701: An MN obtains identifiers of L candidate PSCells and corresponding first information.

In a possible implementation, the MN serves as a trigger node, and the MN determines the identifiers of the L candidate PSCells and the corresponding first information.

In another possible implementation, the MN obtains the identifiers of the L candidate PSCells and the corresponding first information from a source SN, where the source SN serves as a trigger node. For example, the MN receives an SN change request message from the source SN. The SN change request message indicates to request a procedure of continuous CPC, and includes the identifiers of the L candidate PSCells and the corresponding first information.
(1) Identifiers of the L candidate PSCells. The L candidate PSCells may be understood as candidate PSCells recommended by the source SN based on a measurement result. For example, a PSCell (a source PSCell) currently accessed by UE is a PSCell 0, and the L candidate PSCells may include: a PSCell 1, a PSCell 2, a PSCell 3, ..., and a PSCell L.
(2) First information corresponding to the L candidate PSCells. For example, the first information may include one or more of an execution trigger condition and measurement configuration information. It may be understood that execution trigger conditions respectively corresponding to the L candidate PSCells indicate: an execution trigger condition of handover from the PSCell 0 to the PSCell 1, or the PSCell 2, ..., or the PSCell L. The measurement configuration information may indicate the UE to perform cell measurement and evaluation, so that the UE performs CPC.

It should be noted that, in this embodiment of this application, an information format of each piece of information included in the SN change request message is not limited. For example, the SN change request message may also include but is not limited to one or more of the identifiers of the L candidate PSCells, the execution trigger conditions corresponding to the identifiers of the L candidate PSCells, and measurement configuration information corresponding to the identifiers of the L candidate PSCells. In other words, the information may be displayed in a parallel manner, in an embedded manner, in an aggregated manner, or the like. This is not limited in this application. In addition, an information format of one or more pieces of information included in various messages described in another embodiment is not limited in this application, and details are not described subsequently.

S702: The MN sends an SN addition request message to at least one candidate SN to which the L candidate PSCells belong. It should be noted that, in FIG. 7, an example in which the at least one candidate SN is a first candidate SN and a second candidate SN is used. During actual implementation, the MN may send the SN addition request message to more or fewer candidate SNs, and the candidate SN may be determined based on the L candidate PSCells, or may be determined by the MN. This is not limited in this application. For example, the MN determines, in response to the SN change request message sent by the source SN, one or more candidate SNs to which the L candidate PSCells belong.

The SN addition request message is used to request to add a candidate SN. In this way, the candidate SN may allocate a radio resource of the candidate PSCell to the UE in response to the SN addition request message. For example, the SN addition request message sent by the MN to the first candidate SN is used as an example, and may include but is not limited to one or more of the following information:
(1) At least one recommended candidate PSCell. For example, the candidate PSCells sent by the MN to the first candidate SN may include a PSCell 1 and a PSCell 3 that belong to the first candidate SN. For another example, the candidate PSCells sent by the MN to the second candidate SN may include a PSCell 2 and a PSCell 4 that belong to the second candidate SN. It may be understood that the MN may separately send, based on information about the L candidate PSCells that are determined by the MN or recommended by the source SN, an SN addition request message to a candidate SN in which the candidate PSCell is located.
(2) First information corresponding to the at least one recommended candidate PSCell. For example, the first information may include one or more of an execution trigger condition and measurement configuration information.

It may be understood that the MN may send one or more of the obtained candidate PSCell, the corresponding execution trigger condition, and the measurement configuration information to the candidate SN. In this way, the candidate SN may update/modify one or more pieces of information in the execution trigger condition and the measurement configuration information based on the SN addition request message sent by the MN.

S703: The first candidate SN and the second candidate SN each returns an SN addition request acknowledgment message to the MN. The SN addition request acknowledgment message indicates that each candidate SN separately responds to the SN addition request message from the MN. The SN addition request acknowledgment message returned by the first candidate SN is used as an example, and may include one or more of the following information:
(1) First information corresponding to at least one prepared candidate PSCell. The at least one prepared candidate PSCell may be understood as a candidate PSCell that is determined by the first candidate SN and that allows the UE to access. Optionally, if the SN addition request message that is received by the first candidate SN and that is from the MN includes at least one recommended candidate PSCell, the first candidate SN may sequentially determine the at least one recommended candidate PSCell, and feed back, to the MN, a candidate PSCell that is determined as allowing the UE to access and an execution trigger condition and measurement configuration information that correspond to one or more candidate PSCells.
(2) Second RRC messages respectively corresponding to the at least one prepared candidate PSCell. For example, the second RRC message may include an SCG configuration, and second information corresponding to the one or more candidate PSCells. The second information may also include one or more of the execution trigger condition and the measurement configuration information of the candidate PSCell. It may be understood that the one or more candidate PSCells included in the second RRC message are determined relative to each prepared candidate PSCell. For example, if the prepared candidate PSCell is a PSCell 1, one or more candidate PSCells included in a second RRC message of the PSCell 1 may be understood as neighboring cells of the PSCell 1. For example, the neighboring cells may include a PSCell 2, a PSCell 3, ..., and a PSCell L.

For example, a second RRC message corresponding to each candidate PSCell indicates, after the UE accesses the candidate PSCell, to update the CPC configuration applied by the UE, so as to accurately execute continuous CPC. For example, the PSCell 1 is used as an example, and the second RRC message corresponding to the PSCell 1 may include an execution trigger condition of a candidate PSCell. In the second RRC message, the execution trigger condition of the candidate PSCell indicates an execution trigger condition of handover from the PSCell 1 to the PSCell 2, or the PSCell 3, ..., or the PSCell L.

In this embodiment of this application, the second information included in the second RRC message may be in a full information manner, or may be in an incremental information manner. In this embodiment, an implementation of the incremental information is first described. It may be understood that, when the incremental information manner is used, corresponding reference information further needs to be set. The reference information may be determined by the source SN, or may be determined by the candidate SN. The following manner A1 and manner A2 are separately described.

Manner A1: The reference information may be the first information, and the first information is determined by the trigger node (the MN or the source SN). For example, the reference information may be the first information that corresponds to the candidate PSCell and that is obtained by the MN in the descriptions of the foregoing embodiment. It may be understood that the first information corresponding to the candidate PSCell is one or more of the execution trigger condition and the measurement configuration information that are of the candidate PSCell and that are obtained based on a current PSCell (assumed to be PSCell 0) of the UE. In this case, the candidate SN may directly use the first information of the candidate PSCell received from the MN as reference information.

Further, the candidate SN may first determine an actual execution trigger condition of handover from each candidate PSCell to another candidate PSCell, for example, an execution trigger condition of handover from the PSCell 1 to the PSCell 2, and an execution trigger condition of handover from the PSCell 1 to the PSCell 3. Then, the candidate SN may obtain, based on the reference information and the actual execution trigger condition, incremental information of the execution trigger condition of handover from each candidate PSCell to another candidate PSCell, or may be understood as the second information corresponding to the candidate PSCell described in the foregoing embodiment. In this way, based on a concept that full information can be obtained based on the reference information and the incremental information, after receiving the first information corresponding to the candidate PSCell and the second information corresponding to the candidate PSCell, the UE may determine third information corresponding to the candidate PSCell. The third information may indicate an indirectly obtained actual execution trigger condition of handover from each candidate PSCell to another candidate PSCell. In addition, message overheads can be reduced based on the incremental information, and complexity of applying the updated CPC by the UE can be reduced. It may be understood that, similar to the first information and the second information, the third message may also include one or more of an execution trigger condition and measurement configuration information.

For example, the candidate PSCell 1 is used as an example. The second RRC message of the PSCell 1 may include: second information of the PSCell 2, second information of the PSCell 3, and the like. It may be understood that the second RRC message of the PSCell 1 includes the second information corresponding to the candidate PSCell, to implement CPC after the UE accesses the PSCell 1.

Manner A2: The reference information may be determined based on a candidate SN. Similar to the manner 1, when the candidate SN does not receive, from the MN, the first information corresponding to the candidate PSCell, or even if the candidate SN receives, from the MN, the first information corresponding to the candidate PSCell, the candidate SN may not use the first information that corresponds to the candidate PSCell and that is from the source SN as reference information, but customize reference information. For example, the candidate SN may customize the reference information, and then determine the actual execution trigger condition of handover from each candidate PSCell to another candidate PSCell. In this way, the candidate SN may indicate the customized reference information to the UE, and the UE may also indirectly obtain, based on the reference information of each candidate SN and the second RRC message of the candidate PSCell, the actual execution trigger condition of handover from each candidate PSCell to another candidate PSCell. In addition, different candidate SNs may correspond to different customized reference information.

Manner A2: The candidate SN determines the second information in a full information manner. Similar to the manner 1, when the candidate SN does not receive, from the MN, the first information corresponding to the candidate PSCell, or even if the candidate SN receives, from the MN, the first information corresponding to the candidate PSCell, the candidate SN may not use the first information that corresponds to the candidate PSCell and that is from the source SN as reference information, but customize reference information. For example, the candidate SN determines an actual execution trigger condition of handover from each candidate PSCell to another candidate PSCell, and the actual execution trigger condition is included in second information of the second RRC message. In this way, the UE may directly obtain, based on the second RRC message of the candidate PSCell, the actual execution trigger condition of handover from each candidate PSCell to another candidate PSCell.

The second message may include one or more of the following information in an incremental information manner:
(1) Updated measurement identifier information. For example, the measurement ID described in the foregoing Table 1 in the execution trigger condition may be modified.
(2) Updated measurement event. For example, the measurement event described in the foregoing Table 1 in the execution trigger condition may be modified.
(3) Updated measurement object. For example, the measurement object described in the foregoing Table 1 in the execution trigger condition may be modified.
(4) Information about P PSCells may be information about identifiers of the P PSCells, or may be information about identifiers of PSCells other than the P PSCells in the M candidate PSCells, or may be a corresponding execution trigger condition that indicates the UE to release the P PSCells. The P PSCells are not candidate PSCells of the UE, and P is a positive integer. It can be understood that, because distribution of cells is different, a neighboring cell when obtained the UE accesses the PSCell 0 may be different from a neighboring cell obtained when the UE accesses the PSCell 1. For example, candidate PSCells of the PSCell 0 may include the PSCell 1, the PSCell 2, and the PSCell 3, and candidate PSCells of the PSCell 1 may include the PSCell 2. In other words, the PSCell 3 may be used as a neighboring cell of the PSCell 0 but not as a neighboring cell of the PSCell 1. In this scenario, information about the PSCell 3 indicated in the second RRC message of the PSCell 1 may indicate whether the execution trigger condition of the PSCell 3 is met is not evaluated when the CPC is performed in the scenario in which the UE accesses the PSCell 1; or the execution trigger condition of the PSCell 3 may be released. In this way, the UE does not need to evaluate whether an execution trigger condition of an invalid neighboring cell is met when accessing the PSCell 1, to save overheads.

The second message may include one or more of the following information in a full information manner:
(1) Determine Q candidate primary secondary cells, and set corresponding execution trigger conditions. The Q candidate primary secondary cells are candidate primary secondary PSCells on which CPC evaluation is performed after the UE accesses the candidate PSCell. For example, the measurement ID described in the foregoing Table 1 in the execution trigger condition may be set.
(2) Set a measurement event. For example, the measurement event described in the foregoing Table 1 in the execution trigger condition may be set.
(3) Set a measurement object. For example, the measurement object described in the foregoing Table 1 in the execution trigger condition may be set.

S705: The MN sends a first RRC reconfiguration message to the UE. The first RRC reconfiguration message includes first information of the M candidate PSCells, and the first RRC reconfiguration message further includes second RRC messages of the M candidate PSCells. The first information may include but is not limited to one or more of an execution trigger condition and measurement configuration information.

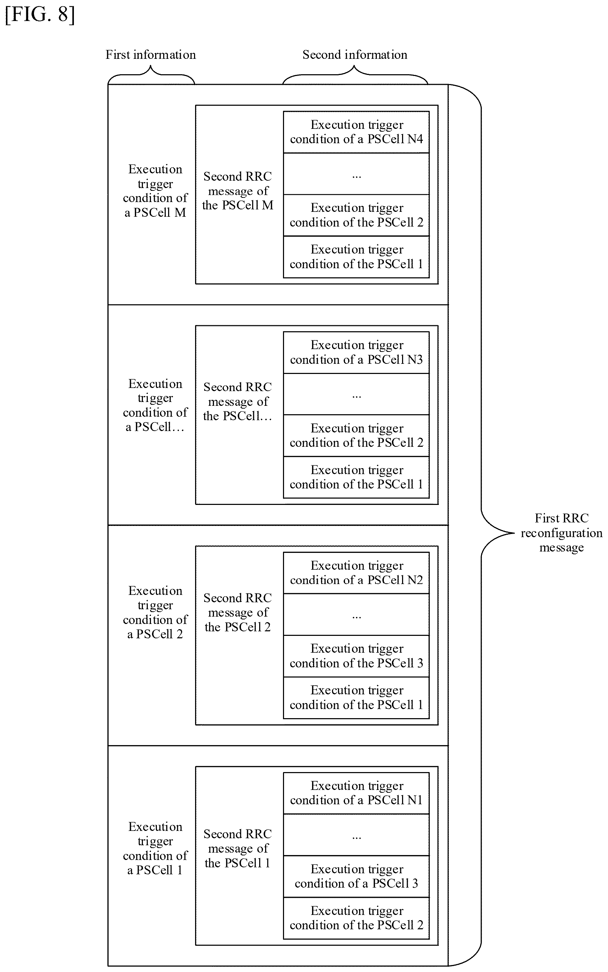

For example, FIG. 8 is an example diagram of a first RRC reconfiguration message according to an embodiment of this application. It can be learned from FIG. 8 that the first RRC reconfiguration message may include but is not limited to the first information corresponding to the M candidate PSCells and the second RRC messages corresponding to the M candidate PSCells. For example, the first information corresponding to the M candidate PSCells may include: an execution trigger condition of the change from the PSCell 0 to the PSCell 1, an execution trigger condition of the change from the PSCell 0 to the PSCell 2, ..., and an execution trigger condition of the change from the PSCell 0 to the PSCell M. When the execution trigger condition of the PSCell 1 is met, the second RRC message corresponding to the PSCell 1 may be applied. The second RRC message may include second information corresponding to the N candidate PSCells. For example, the second information corresponding to the PSCell 1 in the M candidate PSCells may include: an execution trigger condition of the change from the PSCell 1 to the PSCell 2, an execution trigger condition of the change from the PSCell 1 to the PSCell 3, ..., and an execution trigger condition of the change from the PSCell 1 to the PSCell N1. Considering that a neighboring cell of the PSCell 0 may be different from a neighboring cell of the PSCell 1, the PSCell 1 may include execution trigger conditions of N1 candidate PSCells, where N1 is a positive integer less than or equal to M. Similarly, the PSCell 2 may include execution trigger conditions of N2 candidate PSCells, the PSCell 3 may include execution trigger conditions of N3 candidate PSCells, and the PSCell 4 may include execution trigger conditions of N4 candidate PSCells. Values of N1, N2, N3, and N4 may be determined based on a quantity of neighboring cells of a corresponding candidate PSCell.

In addition, in another optional implementation, the first RRC reconfiguration message may include the reference information described in S703. In another optional implementation, the MN may alternatively indicate the reference information to the UE through a separate RRC reconfiguration message. It may be understood that, in this case, the second information in the second RRC messages of the M candidate PSCells is obtained in an incremental information form.

S706: The UE sends an RRC reconfiguration complete message to the MN. It should be noted that, in this case, the UE does not add a candidate PSCell, and continues to determine whether there is a candidate PSCell that meets the execution trigger condition. It may be understood that the RRC reconfiguration complete message in this step may indicate that the UE receives the first RRC reconfiguration message.

Optionally, S707: The MN or the source SN starts an SN modification procedure (to update the incremental second information based on the first information). The MN or the source SN may update one or more of information like the execution trigger condition, the measurement configuration information, and the reference information. In this case, the MN may re-deliver a first RRC reconfiguration message to the UE. Based on this, the UE may evaluate, based on a latest first RRC reconfiguration message, whether the execution trigger condition of the candidate PSCell is met.

S708: The UE evaluates the candidate PSCell. It may be understood that the UE evaluates, based on the execution trigger conditions that are of the M PSCells included and that are in the first RRC reconfiguration message, whether there is a candidate PSCell that meets the corresponding execution trigger condition. For example, when the UE detects that the PSCell 1 meets the corresponding execution trigger condition, the UE applies the second RRC message of the PSCell 1. In addition, the UE may further send the RRC reconfiguration complete message to the MN, to indicate, to the MN, the second RRC message corresponding to the PSCell 1 or the PSCell 1.

It may be understood that, in this embodiment of this application, the first RRC reconfiguration message further includes and applies the second RRC message of each candidate PSCell, so that the CPC configuration applied by the UE can be updated when the UE performs a procedure of continuous CPC, and the UE can perform an accurate CPC, to avoid occurrence of a radio link failure problem caused by information not being updated.

S709: The UE performs a random access procedure with the first candidate SN in which the first candidate PSCell is located. An example in which the PSCell 1 meets the corresponding execution trigger condition is still used. The UE changes from accessing the PSCell 0 to accessing the PSCell 1, and performs the random access procedure with the candidate SN in which the PSCell 1 is located, to access the PSCell 1. For the random access procedure, refer to content defined in a current standard. Details are not described herein.

S710: The UE continues to evaluate the candidate PSCell. It may be understood that, a difference from S708 lies in that the CPC configuration applied by the UE in this case is determined based on the second RRC message of the PSCell 1, and is different from the CPC configuration applied in S708. Therefore, in this embodiment of this application, that the UE continues to evaluate the candidate PSCell after changing from the PSCell 0 to the PSCell 1 is implemented based on an execution trigger condition of handover from the PSCell 1 to each candidate PSCell. In comparison with a current communication technology in which an execution trigger condition of handover from the PSCell 0 to each candidate PSCell is still used, this application can improve accuracy of continuous CPC.

It may be understood that the UE evaluates, based on execution trigger conditions that are of the N1 PSCells and that are included in the second RRC message of the PSCell 1, whether there is a candidate PSCell that meets the corresponding execution trigger condition. For example, when the UE detects that the PSCell 2 meets the execution trigger condition that is of the PSCell 2 and that corresponds to the second RRC message of the PSCell 1, the UE continues to apply the second RRC message of the PSCell 2. It may be understood that the UE may further re-send the RRC reconfiguration complete message to the MN, to indicate the second RRC message of the PSCell 2 or the PSCell 2 to the MN.

S711: The UE performs a random access procedure with the second candidate SN in which the second candidate PSCell is located. An example in which the PSCell 2 meets the execution trigger condition that is of the PSCell 2 and that corresponds to the second RRC message of the PSCell 1 is still used. The UE changes from accessing the PSCell 1 to accessing the PSCell 2, and performs the random access procedure with the candidate SN in which the PSCell 2 is located, to access the PSCell 2.

It may be understood that the UE may further continue to evaluate the candidate PSCell based on the second RRC message of the PSCell 2. For a subsequent procedure, refer to the procedure described in S710 and S711 until the UE detects that the network side indicates the UE to release the CPC configuration.

It can be learned from the content described in Embodiment 1 that, according to the CPC method provided in this embodiment of this application, the CPC configuration applied by the UE can be updated, so that the execution trigger condition used when the UE performs cell measurement and evaluation can be generated based on the currently accessed serving PSCell. In this way, the accuracy of continuous CPC performed by the UE can be improved, and the occurrence of the radio link failure problem caused by the inaccurate CPC configuration can be avoided.

### Embodiment 2

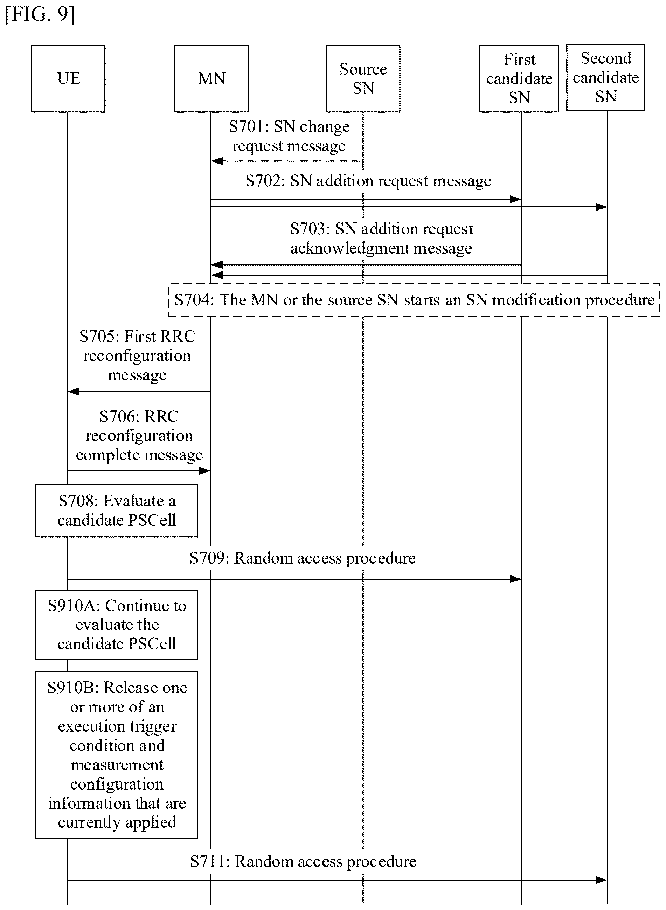

FIG. 9 is a diagram of an interaction procedure of a CPC method according to an embodiment of this application. The method may be applied between UE and a network device, and the method may be applied to a scenario of continuous CPC. The method may include the following detailed steps:
S701: If an SN triggers a procedure, a source SN sends an SN change request message to an MN. If an MN triggers a procedure, S701 is skipped.
S702: The MN sends an SN addition request message to at least one candidate SN to which L candidate PSCells belong.
S703: A first candidate SN and a second candidate SN each returns an SN addition request acknowledgment message to the MN. Based on the content described in Embodiment 1, a candidate SN may generate, in an incremental information manner or a full information manner, second information that is included in a second RRC message and that corresponds to a candidate PSCell. Embodiment 2 describes an implementation of full information. It may be understood that, in comparison with the incremental information, corresponding reference information does not need to be set for the full information.

Optionally, when the candidate SN receives, through the SN addition request acknowledgment message, the first information corresponding to the candidate PSCell, the candidate SN may determine, based on the first information or not based on the first information, an actual execution trigger condition of handover from each candidate PSCell to another candidate PSCell.

In another optional manner, when the candidate SN does not receive, through the SN addition request acknowledgment message, the first information corresponding to the candidate PSCell, the candidate SN may alternatively directly determine an actual execution trigger condition of handover from each candidate PSCell to another candidate PSCell.

It may be understood that the second information that corresponds to the candidate PSCell and that is included in the second RRC message corresponding to the candidate PSCell in Embodiment 2 is one or more of an actual execution trigger condition and actual measurement configuration information.

Optionally, in S704, that the MN or the source SN starts an SN modification procedure (to update full information) may be updating only N candidate PSCells indicated in the second RRC message for the candidate PSCell.

S705: The MN sends a first RRC reconfiguration message to the UE. The first RRC reconfiguration message may include but is not limited to first information corresponding to M candidate PSCells and second RRC messages corresponding to the M candidate PSCells. The second RRC message corresponding to each candidate PSCell further includes second information that corresponds to N candidate PSCells and that is in the M candidate PSCells.

S706: The UE sends an RRC reconfiguration complete message to the MN.

S708: The UE evaluates the candidate PSCell. In a subsequent procedure, an example in which the UE determines, through evaluation, that a first candidate PSCell meets the execution trigger condition that is indicated by the first information and that is in the first RRC reconfiguration message is used. It may be understood that the UE applies the second RRC message corresponding to the first candidate PSCell.

S709: The UE performs a random access procedure with the first candidate SN in which the first candidate PSCell is located.

S910A: The UE continues to evaluate the candidate PSCell. In a subsequent procedure, an example in which the UE determines, through evaluation, that a second candidate PSCell meets the execution trigger condition that is indicated by the second information and that is in the second RRC message is used. It may be understood that the UE updates the second RRC message corresponding to the second candidate PSCell.

S910B: The UE releases one or more of the execution trigger condition and the measurement configuration information that are currently applied. It may be understood that, based on Embodiment 2, the second information that is included in the second RRC message and that corresponds to the candidate PSCell generated by the candidate SN is implemented based on full information. The UE releases the third information that is currently applied. The second information may be a part or all of the first information that is currently applied by the UE, or may be the second information included in the second RRC message of the first candidate PSCell. The second RRC message of the first candidate PSCell is applied, and the second information included in the second RRC message of the second candidate PSCell is used to evaluate the candidate PSCell, so that a more accurate CPC can be implemented.

S711: The UE performs a random access procedure with the second candidate SN in which the second candidate PSCell is located.

It should be noted that an implementation process in Embodiment 2 is similar to that in Embodiment 1, and details are not described herein again. For details, refer to content described in Embodiment 1.

### Embodiment 3

Embodiment 1 and Embodiment 2 describe two optional implementations of updating/resetting one or more of the execution trigger condition and the measurement configuration information. In a scenario of continuous CPC, a message exchanged between the UE and the network device may further include an SCG configuration. Generally, in consideration of factors such as reducing message overheads, the SCG configuration is usually an incremental configuration. It may be understood that Embodiment 3 may be combined with Embodiment 1 or Embodiment 2, and a specific implementation process is not described herein again.

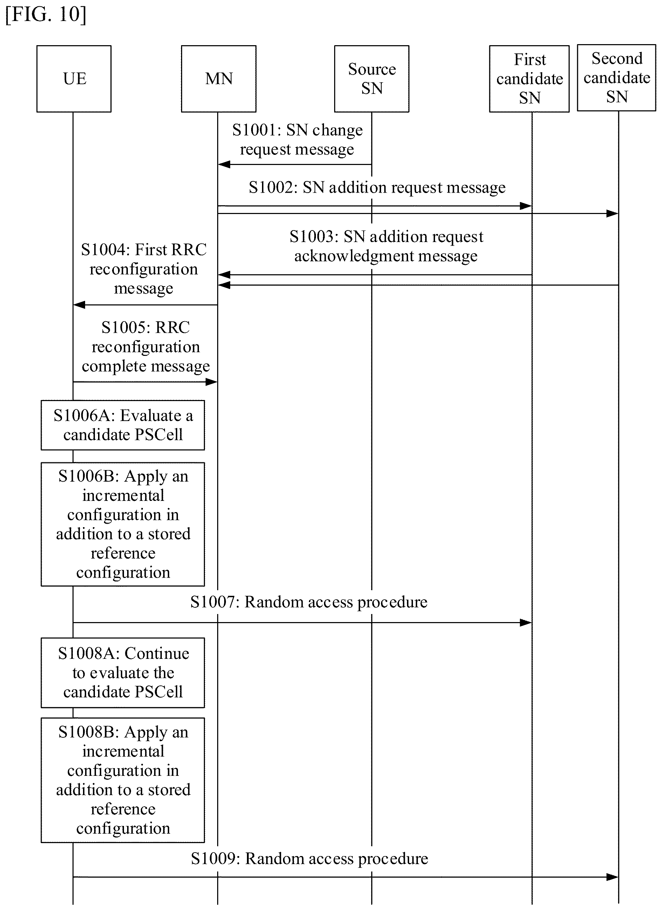

FIG. 10 is a diagram of an interaction procedure of a CPC method according to an embodiment of this application. The method may be applied between UE and a network device, and the method may be applied to a scenario of continuous CPC. The method may include the following detailed steps:

S1001: A source SN sends an SN change request message to an MN. The SN change request message includes a reference configuration, and the reference configuration includes an SCG configuration. For example, the SCG configuration from the source SN may be used as a reference configuration.

It should be noted that, with reference to the description of S701 in Embodiment 1, an information format of each piece of information is not limited in this embodiment of this application. For example, the reference configuration may include only the SCG configuration. For another example, in addition to the SCG configuration, the reference configuration may further include the first information corresponding to the L candidate cells in Embodiment 1. The first information includes one or more of an execution trigger condition and measurement configuration information. It may be understood that, in this case, the first information included in the reference configuration may also be used as reference measurement configuration information, so that a candidate SN generates one or more of incremental measurement configuration information and an incremental execution trigger condition.

In addition, the reference configuration may be a newly added information element in the SN change request message, or may be a new message. This is not limited in this application.

S1002: The MN sends an SN addition request message to at least one candidate SN to which the L candidate PSCells belong. The SN addition request message includes the reference configuration.

S1003: A first candidate SN and a second candidate SN each returns an SN addition request acknowledgment message to the MN.

For example, the candidate SN may obtain, based on an actual SCG configuration corresponding to each candidate PSCell when the candidate SN accesses each candidate PSCell, the reference configuration, and the actual SCG configuration, an incremental SCG configuration corresponding to each PSCell. In addition, the candidate SN may also determine an MCG configuration corresponding to each PSCell.

S1004: The MN sends a first RRC reconfiguration message to the UE. As described in Embodiment 1 or Embodiment 2, the first RRC reconfiguration message may include but is not limited to first information corresponding to M candidate PSCells and second RRC messages corresponding to the M candidate PSCells. The second RRC message corresponding to each candidate PSCell further includes second information that corresponds to N candidate PSCells and that is in the M candidate PSCells.

In Embodiment 3, the first RRC reconfiguration message may further include a reference configuration. Optionally, the reference configuration may include an SCG configuration. In another optional implementation, the reference configuration may further include an SCG configuration and an MCG configuration. The UE may store the reference configuration.

Based on this, the second RRC message may further include an incremental SCG configuration corresponding to each candidate PSCell. Alternatively, the second RRC message may further include an incremental SCG configuration and an MCG configuration that correspond to each candidate PSCell.

S1005: The UE sends an RRC reconfiguration complete message to the MN.

S1006A: The UE evaluates the candidate PSCell. In a subsequent procedure, an example in which the UE determines, through evaluation, that a first candidate PSCell meets the execution trigger condition that is indicated by the first information and that is in the first RRC reconfiguration message is used.

S1006B: The UE applies the incremental configuration in addition to the stored reference configuration. For example, to access the first candidate PSCell, the UE first applies the reference configuration, and then applies the second RRC message corresponding to the first candidate PSCell. In this way, the UE may apply, based on the SCG configuration included in the reference configuration and the incremental SCG configuration indicated in the second RRC message corresponding to the first candidate PSCell, the complete SCG configuration corresponding to the first candidate PSCell. In an implementation process of the SCG configuration, the UE may also apply, based on the MCG configuration included in the reference configuration and the MCG configuration indicated in the second RRC message corresponding to the first candidate PSCell, the complete MCG configuration corresponding to the first candidate PSCell.

S1007: The UE performs a random access procedure with the first candidate SN in which the first candidate PSCell is located.

S1008A: The UE continues to evaluate the candidate PSCell. In a subsequent procedure, an example in which the UE determines, through evaluation, that a second candidate PSCell meets the execution trigger condition that is indicated by the second information and that is in the second RRC message is used.

S1008B: The UE applies the incremental configuration in addition to the stored reference configuration. For example, the UE applies the reference configuration based on the first RRC reconfiguration message, and then applies the second RRC message corresponding to the second candidate PSCell. In this way, the UE may apply, based on the SCG configuration included in the reference configuration and the incremental SCG configuration indicated in the second RRC message corresponding to the second candidate PSCell, the complete SCG configuration corresponding to the second candidate PSCell. In an implementation process of the SCG configuration, the UE may also apply, based on the MCG configuration included in the reference configuration and the MCG configuration indicated in the second RRC message corresponding to the second candidate PSCell, the complete MCG configuration corresponding to the second candidate PSCell.

S1009: The UE performs a random access procedure with the second candidate SN in which the second candidate PSCell is located.

It can be learned from the content described in Embodiment 3 that, according to the CPC method provided in this embodiment of this application, the CPC configuration applied by the UE can be updated, so that the SCG configuration used when the UE performs cell measurement and evaluation can be generated based on the currently accessed serving PSCell. In this way, the accuracy of continuous CPC performed by the UE can be improved, and the occurrence of the radio link failure problem caused by the inaccurate CPC configuration can be avoided.

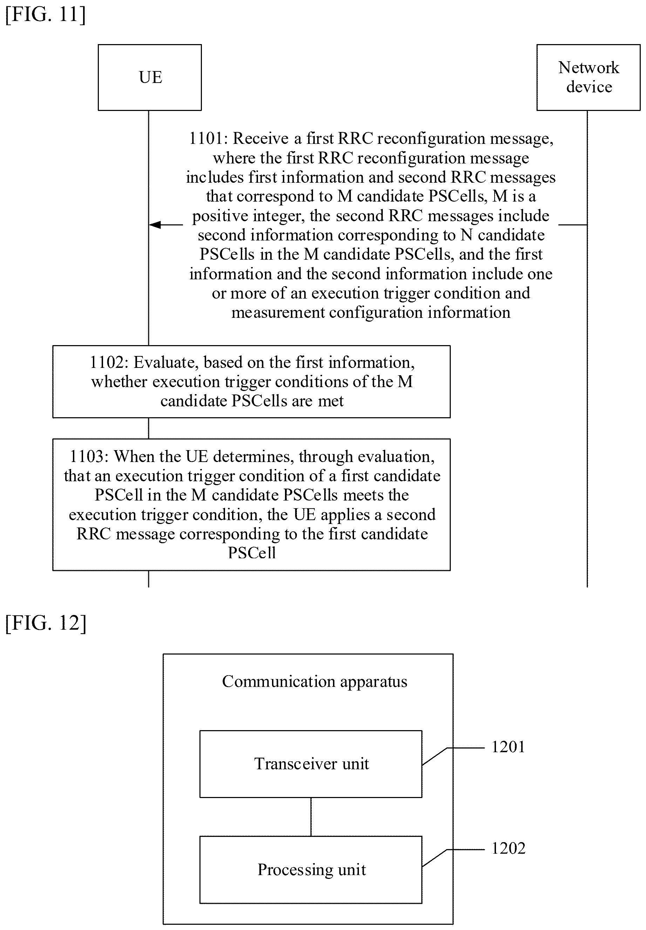

In some other embodiments, FIG. 11 is a schematic flowchart of a CPC method according to an embodiment of this application. The procedure may include the following steps.

S1101: UE receives a first RRC reconfiguration message from a network device, where the first RRC reconfiguration message includes first information and second RRC messages that correspond to M candidate PSCells, M is a positive integer, the second RRC messages include second information corresponding to N candidate PSCells in the M candidate PSCells, and the first information and the second information include one or more of an execution trigger condition and measurement configuration information. The network device may be, for example, the MN in the foregoing embodiments, or may be another network device.

S1102: The UE evaluates, based on the first information, whether execution trigger conditions of the M candidate PSCells are met.

S1103: When the UE determines, through evaluation, that an execution trigger condition of a first candidate PSCell in the M candidate PSCells meets the execution trigger condition, the UE applies a second RRC message corresponding to the first candidate PSCell.

For an implementation process in FIG. 11, refer to the content described in FIG. 7 to FIG. 10. Details are not described herein again.

Based on a same inventive concept as the method embodiments, an embodiment of this application provides a communication apparatus (which may also be referred to as a "CPC apparatus"). A structure of the communication apparatus may be shown in FIG. 12. The communication apparatus includes a transceiver unit 1201 and a processing unit 1202.

In a specific implementation, the communication apparatus may be specifically configured to implement the method performed by the UE in the embodiments in FIG. 7 to FIG. 11. The apparatus may be the UE, or may be a chip or a chipset in the UE, or a part of a chip that is configured to perform related method functions. The transceiver unit 1201 is configured to receive and send a message. The processing unit 1202 is configured to control the transceiver unit 1201 to perform the following actions: receive a first RRC reconfiguration message from a network device, where the first RRC reconfiguration message includes first information and second RRC messages that correspond to M candidate PSCells, M is a positive integer, the second RRC messages include second information corresponding to N candidate PSCells in the M candidate PSCells, and the first information and the second information include one or more of an execution trigger condition and measurement configuration information; evaluate, based on the first information, whether execution trigger conditions of the M candidate PSCells are met; and when it is determined, through evaluation, that an execution trigger condition of a first candidate PSCell in the M candidate PSCells meets the execution trigger condition, the UE applies a second RRC message corresponding to the first candidate PSCell.

In a possible design, after being configured to apply the second RRC message corresponding to the first candidate PSCell, the processing unit 1202 is further configured to: evaluate, based on the second information, whether execution trigger conditions of the N candidate PSCells are met.

In a possible design, after being configured to apply the second RRC message corresponding to the first candidate PSCell, the processing unit 1202 is further configured to: determine, based on the first information and the second information, third information corresponding to the N PSCells, where the third information includes one or more of an execution trigger condition and measurement configuration information; and evaluate, based on the third information, whether execution trigger conditions of the N candidate PSCells are met.

In a possible design, the second RRC message further includes first indication information, where the first indication information indicates UE not to evaluate, when accessing the first candidate PSCell, whether execution trigger conditions of P candidate PSCells are met, and the M candidate PSCells include the P candidate PSCells.

In a possible design, the first RRC reconfiguration message further includes a reference configuration, and the reference configuration includes a secondary cell group SCG configuration and a master cell group MCG configuration. The second RRC reconfiguration message further includes SCG configurations corresponding to the N candidate PSCells. The processing unit 1202 is configured to apply the second RRC message corresponding to the first candidate PSCell, and is specifically configured to obtain, based on the reference configuration and the second RRC message, an MCG configuration and an SCG configuration that correspond to the first candidate PSCell.

In a possible design, the second RRC reconfiguration message further includes the MCG configurations corresponding to the N candidate PSCells.

In a possible design, the first information is included in the reference configuration.

In another specific implementation, the communication apparatus may be specifically configured to implement the method performed by the network device in the embodiments in FIG. 7 to FIG. 11. The apparatus may be the network device, or may be a chip or a chipset in the network device, or a part of a chip that is configured to perform related method functions. For example, the network device may be the primary base station in the foregoing embodiment. The transceiver unit 1201 is configured to receive and send a message. The processing unit 1202 is configured to control the transceiver unit 1201 to perform the following actions: receive a first message from a source secondary base station, where the first message includes identifiers of L candidate PSCells and corresponding first information, and L is a positive integer; send a second message to at least one candidate secondary base station, where the second message is used to request to add a secondary base station; receive, from the at least one candidate secondary base station, second RRC messages corresponding to M candidate PSCells, where M is a positive integer, the second RRC message includes second information corresponding to N candidate PSCells in the M candidate PSCells; and send a first RRC reconfiguration message to the UE, where the first RRC reconfiguration message includes first information and the second RRC messages that correspond to the M candidate PSCells, and the first information and the second information include one or more of an execution trigger condition and measurement configuration information.

In a possible design, the second message includes the first information corresponding to the L candidate PSCells, and the first information is used by the at least one candidate secondary base station to determine the second information.

In a possible design, the first message includes a first reference configuration, and the first reference configuration includes an SCG configuration.

In a possible design, the second message includes the first reference configuration, and the first reference configuration is an SCG configuration used by the at least one candidate secondary base station to determine the second RRC message.

In a possible design, the second RRC reconfiguration message further includes an MCG configuration.

In a possible design, the first RRC reconfiguration message further includes a reference configuration, the reference configuration includes the first reference configuration and the MCG configuration; and the reference configuration is used by the UE to obtain, based on the second RRC message, an MCG configuration and an SCG configuration that correspond to a first candidate PSCell.

In another specific implementation, the communication apparatus may be specifically configured to implement the methods performed by the candidate secondary base station in the embodiments in FIG. 7 to FIG. 11. The apparatus may be the candidate secondary base station, or may be a chip or a chipset in the candidate secondary base station, or a part of a chip configured to perform related method functions. The transceiver unit 1201 is configured to receive and send a message. The processing unit 1202 is configured to control the transceiver unit 1201 to perform the following actions: receive a second message from a primary base station, where the second message is used to request to add a secondary base station; and send a third message to the primary base station, where the third message indicates a second RRC message corresponding to at least one candidate PSCell, the second RRC message includes second information corresponding to N candidate PSCells, and the second information includes one or more of an execution trigger condition and measurement configuration information.

In a possible design, the second message includes first information corresponding to L candidate PSCells, the first information is one or more of an execution trigger condition and measurement configuration information, and the first information is used by the candidate secondary base station to determine the second information.

In a possible design, the second message includes a first reference configuration, the first reference configuration includes an SCG configuration, and the first reference configuration is an SCG configuration used by the candidate secondary base station to determine the second RRC message.

Division into modules in embodiments of this application is an example, and is merely logical function division. During actual implementation, there may be another division manner. In addition, function modules in embodiments of this application may be integrated into one processor, or each of the modules may exist alone physically, or two or more modules may be integrated into one module. The integrated module may be implemented in a form of hardware, or may be implemented in a form of a software function module. It may be understood that for functions or implementations of the modules in embodiments of this application, further refer to related description in the method embodiments.

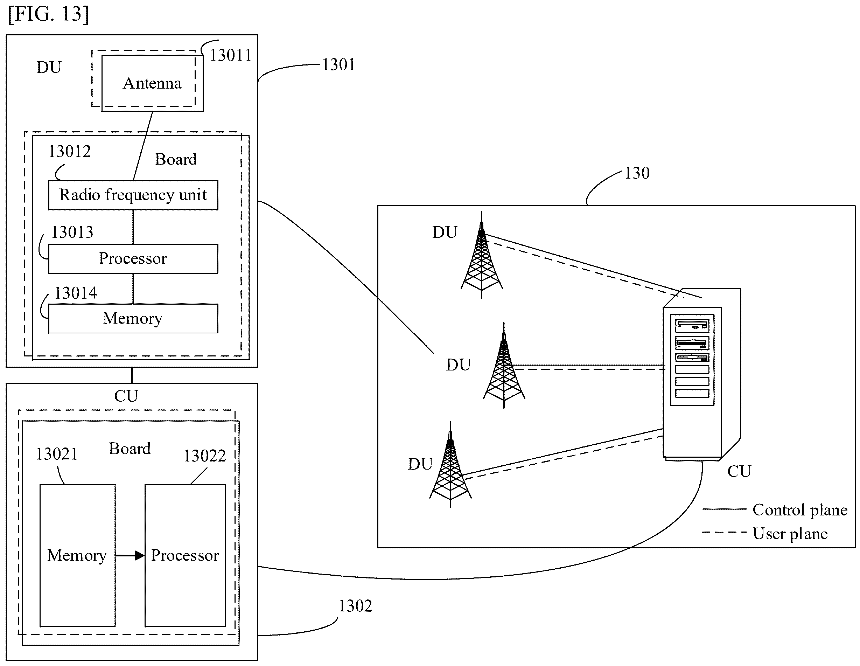

FIG. 13 is a diagram of a structure of a network device (for example, an MN, or a source SN, or a candidate SN) according to an embodiment of this application, for example, a diagram of a structure of a base station. As shown in FIG. 13, the base station may perform functions of the MN, the source SN, or the candidate SN in the method embodiments in FIG. 7 to FIG. 11. The base station 130 may include one or more distributed units (distributed units, DUs) 1301 and one or more centralized units (centralized units, CUs) 1302. The DU 1301 may include at least one antenna 13011, at least one radio frequency unit 13012, at least one processor 13013, and at least one memory 13014. The DU 1301 is mainly configured to: receive and send a radio frequency signal, perform conversion between a radio frequency signal and a baseband signal, and perform some baseband processing. The CU 1302 may include at least one processor 13022 and at least one memory 13021. The CU 1302 and the DU 1301 may communicate with each other through an interface. A control plane (Control plane) interface may be Fs-C, for example, F1-C, and a user plane (User Plane) interface may be Fs-U, for example, F1-U.

The CU 1302 is mainly configured to: perform baseband processing, control the base station, and the like. The DU 1301 and the CU 1302 may be physically arranged together, or may be physically arranged separately, that is, a distributed base station. The CU 1302 is a control center of the base station, may also be referred to as a processing unit, and is mainly configured to implement a baseband processing function.

Specifically, baseband processing of the CU and the DU may be divided based on a protocol layer of a wireless network. For example, functions of a PDCP layer and a protocol layer above the PDCP layer are set on the CU, and functions of protocol layers below PDCP, such as an RLC layer and a MAC layer, are set on the DU. For another example, the CU implements functions of an RRC layer and a PDCP layer, and the DU implements functions of an RLC layer, an MAC layer, and a physical (physical, PHY) layer.

In addition, optionally, the base station 130 may include one or more radio frequency units (RUs), one or more DUs, and one or more CUs. The DU may include at least one processor 13013 and at least one memory 13014, the RU may include at least one antenna 13011 and at least one radio frequency unit 13012, and the CU may include at least one processor 13022 and at least one memory 13021.

In an example, the CU 1302 may include one or more boards, and a plurality of boards may jointly support a radio access network (for example, a 5G network) of a single access standard, or may separately support radio access networks (for example, an LTE network, a 5G network, or another network) of different access standards. The memory 13021 and the processor 13022 may serve one or more boards. In other words, a memory and a processor may be disposed on each board. Alternatively, a plurality of boards may share a same memory and a same processor. In addition, a necessary circuit may further be disposed on each board. The DU 1301 may include one or more boards, and a plurality of boards may jointly support a radio access network (for example, a 5G network) of a single access standard, or may separately support radio access networks (for example, an LTE network, a 5G network, or another network) of different access standards. The memory 13014 and the processor 13013 may serve one or more boards. In other words, a memory and a processor may be disposed on each board. Alternatively, a plurality of boards may share a same memory and a same processor. In addition, a necessary circuit may further be disposed on each board.

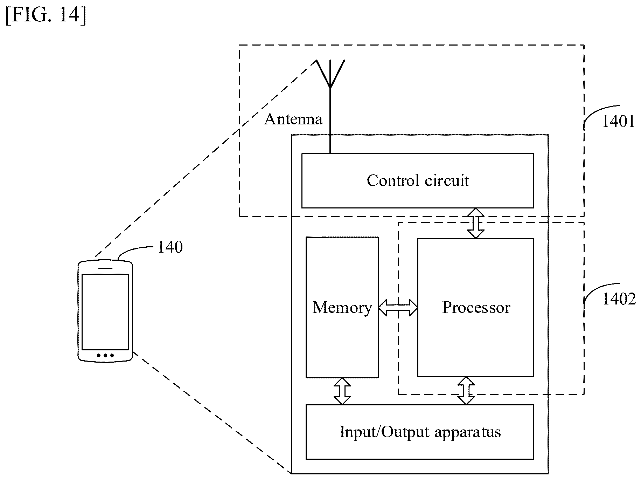

FIG. 14 is a diagram of a structure of UE according to an embodiment of this application. The UE may perform functions of the UE in the method embodiments in FIG. 7 to FIG. 11. For ease of description, FIG. 14 shows only main components of the UE. As shown in FIG. 14, the UE 140 includes a processor, a memory, a control circuit, an antenna, and an input/output apparatus. The processor is mainly configured to: process a communication protocol and communication data, control the entire UE, execute a software program, and process data of the software program, for example, configured to support the UE in performing the actions described in the method embodiments in FIG. 7 to FIG. 11. The memory is mainly configured to store the software program and data. The control circuit is mainly configured to convert a baseband signal and a radio frequency signal and process the radio frequency signal. The control circuit and the antenna together may also be referred to as a transceiver, and are mainly configured to receive and send a radio frequency signal in a form of an electromagnetic wave. The input/output apparatus, such as a touchscreen, a display, or a keyboard, is mainly configured to receive data entered by a user, and output data to the user.

After the UE is powered on, the processor may read the software program in the memory, interpret and execute instructions of the software program, and process data of the software program. When data needs to be sent in a wireless manner, the processor performs baseband processing on the to-be-sent data, and then outputs a baseband signal to a radio frequency circuit. The radio frequency circuit performs radio frequency processing on the baseband signal, and then sends, through the antenna, a radio frequency signal to the outside in an electromagnetic wave form. When data is sent to the UE, the radio frequency circuit receives a radio frequency signal through the antenna, converts the radio frequency signal into a baseband signal, and outputs the baseband signal to the processor. The processor converts the baseband signal into data, and processes the data.

A person skilled in the art may understand that for ease of description, FIG. 14 shows only one memory and only one processor. In actual UE, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in this embodiment of this application.

In an optional implementation, the UE may include a baseband processor and a central processing unit. The baseband processor is mainly configured to process a communication protocol and communication data. The central processing unit is mainly configured to control the entire UE, execute a software program, and process data of the software program. Functions of the baseband processor and the central processing unit may be integrated into the processor in FIG. 14. A person skilled in the art may understand that the baseband processor and the central processing unit each may be an independent processor, and are interconnected by using a technology such as a bus. A person skilled in the art may understand that the UE may include a plurality of baseband processors to adapt to different network standards, and the UE may include a plurality of central processing units to enhance a processing capability of the UE. The components of the UE may be connected by using various buses. The baseband processor may also be expressed as a baseband processing circuit or a baseband processing chip. The central processing unit may alternatively be expressed as a central processing circuit or a central processing chip. A function of processing the communication protocol and the communication data may be built in the processor, or may be stored in the memory in a form of a software program, and the processor executes the software program to implement a baseband processing function.

In this embodiment of this application, the antenna and the control circuit that have receiving and sending functions may be considered as a transceiver unit 1401 of the UE 140, for example, configured to support the UE in performing a receiving function and a sending function. The processor 1402 having a processing function is considered as a processing unit 1402 of the UE 140. As shown in FIG. 14, the UE 140 includes a transceiver unit 1401 and a processing unit 1402. The transceiver unit may also be referred to as a transceiver, a transceiver machine, a transceiver apparatus, or the like. Optionally, a component that is configured to implement a receiving function and that is in the transceiver unit 1401 may be considered as a receiving unit, and a component that is configured to implement a sending function and that is in the transceiver unit 1401 may be considered as a sending unit. In other words, the transceiver unit 1401 includes the receiving unit and the sending unit. The receiving unit may also be referred to as a receiver, an input port, a receiving circuit, or the like. The sending unit may be referred to as a transmitter, a transmitting circuit, or the like.

The processor 1402 may be configured to execute instructions stored in the memory, to control the transceiver unit 1401 to receive a signal and/or send a signal, to complete a function of the UE in the foregoing method embodiments. The processing unit 1402 further includes an interface, configured to implement a signal input/output function. In an implementation, it may be considered that functions of the transceiver unit 1401 are implemented by using a transceiver circuit or a dedicated transceiver chip.

An embodiment of the present invention further provides a computer-readable storage medium, configured to store computer software instructions that need to be executed for execution of the foregoing processor, and the computer-readable storage medium includes a program that needs to be executed for execution of the foregoing processor.

A person skilled in the art should understand that the embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A conditional primary secondary cell change CPC method, comprising:
receiving, by UE, a first RRC reconfiguration message from a network device, wherein the first RRC reconfiguration message comprises first information and second configuration information that correspond to M candidate PSCells, M is a positive integer, the second configuration information comprises second information corresponding to N candidate PSCells in the M candidate PSCells, and the first information and the second information comprise one or more of an execution trigger condition and measurement configuration information;
evaluating, by the UE based on the first information, whether execution trigger conditions of the M candidate PSCells are met; and
when the UE determines, through evaluation, that an execution trigger condition of a first candidate PSCell in the M candidate PSCells meets the execution trigger condition, applying, by the UE, second configuration information corresponding to the first candidate PSCell.

2. The method according to claim 1, wherein after applying, by the UE, the second configuration information corresponding to the first candidate PSCell, the method further comprises:
evaluating, by the UE based on the second information, whether execution trigger conditions of the N candidate PSCells are met.

3. The method according to claim 1, wherein after applying, by the UE, the second configuration information corresponding to the first candidate PSCell, the method further comprises:
determining, by the UE based on the first information and the second information, third information corresponding to the N PSCells, wherein the third information comprises one or more of an execution trigger condition and measurement configuration information; and
evaluating, by the UE based on the third information, whether execution trigger conditions of the N candidate PSCells are met.

4. The method according to claim 1, wherein the second configuration information further comprises first indication information, the first indication information indicates the UE not to evaluate, when accessing the first candidate PSCell, whether execution trigger conditions of P candidate PSCells are met, and the M candidate PSCells comprise the P candidate PSCells.

5. The method according to any one of claims 1 to 4, wherein the first RRC reconfiguration message further comprises a reference configuration, and the reference configuration comprises a secondary cell group SCG configuration and a master cell group MCG configuration; and
the second RRC reconfiguration message further comprises SCG configurations corresponding to the N candidate PSCells; and
applying, by the UE, the second configuration information corresponding to the first candidate PSCell comprises:
obtaining, by the UE based on the reference configuration and the second configuration information, an MCG configuration and an SCG configuration that correspond to the first candidate PSCell.

6. The method according to claim 5, wherein the second configuration information further comprises the MCG configuration corresponding to the first candidate PSCell.

7. The method according to claim 5 or 6, wherein the first information is comprised in the reference configuration.

8. The method according to any one of claims 1 to 7, wherein the second configuration information is a second RRC message.

9. A CPC method, comprising:
obtaining, by a network device, a first message, wherein the first message comprises identifiers of L candidate PSCells and corresponding first information, and L is a positive integer; and sending, by the network device, a second message to at least one candidate secondary base station, wherein the second message is used to request to add a secondary base station, and the first message is determined by the network device, or the first message is a message received from a source secondary base station;
receiving, by the network device from the at least one candidate secondary base station, second configuration information corresponding to M candidate PSCells, wherein M is a positive integer, and the second configuration information comprises second information corresponding to N candidate PSCells in the M candidate PSCells; and
sending, by the network device, a first RRC reconfiguration message to UE, wherein the first RRC reconfiguration message comprises first information and the second configuration information that correspond to the M candidate PSCells, and the first information and the second information comprise one or more of an execution trigger condition and measurement configuration information.

10. The method according to claim 9, wherein the second message comprises the first information corresponding to the L candidate PSCells, and the first information is used by the at least one candidate secondary base station to determine the second information.

11. The method according to claim 9, wherein the first message comprises a first reference configuration, and the first reference configuration comprises an SCG configuration.

12. The method according to claim 9, wherein the second message comprises the first reference configuration, and the first reference configuration is an SCG configuration used by the at least one candidate secondary base station to determine the second configuration information.

13. The method according to claim 12, wherein the second configuration information further comprises an MCG configuration.

14. The method according to claim 12 or 13, wherein the first RRC reconfiguration message further comprises a reference configuration, and the reference configuration comprises the first reference configuration and the MCG configuration; and
the reference configuration is used by the UE to obtain, based on the second configuration information, an MCG configuration and an SCG configuration that correspond to a first candidate PSCell.

15. The method according to any one of claims 9 to 14, wherein the second configuration information is a second RRC message.

16. A CPC method, comprising:
receiving, by a candidate secondary base station, a second message from a primary base station, wherein the second message is used to request to add a secondary base station; and
sending, by the candidate secondary base station, a third message to the primary base station, wherein the third message indicates second configuration information corresponding to at least one candidate PSCell, the second configuration information comprises second information corresponding to N candidate PSCells, and the second information comprises one or more of an execution trigger condition and measurement configuration information.

17. The method according to claim 16, wherein the second message comprises first information corresponding to L candidate PSCells, the first information is one or more of an execution trigger condition and measurement configuration information, and the first information is used by the candidate secondary base station to determine the second information.

18. The method according to claim 16, wherein the second message comprises a first reference configuration, the first reference configuration comprises an SCG configuration, and the first reference configuration is an SCG configuration used by the candidate secondary base station to determine the second configuration information.

19. The method according to any one of claims 16 to 18, wherein the second configuration information is a second RRC message.

20. A conditional primary secondary cell change CPC apparatus, wherein the apparatus comprises a transceiver unit and a processing unit, wherein
the transceiver unit is configured to receive a first RRC reconfiguration message from a network device, wherein the first RRC reconfiguration message comprises first information and second configuration information that correspond to M candidate PSCells, M is a positive integer, the second configuration information comprises second information corresponding to N candidate PSCells in the M candidate PSCells, and the first information and the second information comprise one or more of an execution trigger condition and measurement configuration information;
the processing unit is configured to evaluate, based on the first information, whether execution trigger conditions of the M candidate PSCells are met; and the processing unit is further configured to: when the UE determines, through evaluation, that an execution trigger condition of a first candidate PSCell in the M candidate PSCells meets the execution trigger condition, the UE applies second configuration information corresponding to the first candidate PSCell.

21. The apparatus according to claim 20, wherein after being configured to apply the second configuration information corresponding to the first candidate PSCell, the processing unit is further configured to:
evaluate, based on the second information, whether execution trigger conditions of the N candidate PSCells are met.

22. The apparatus according to claim 20, wherein after being configured to apply the second configuration information corresponding to the first candidate PSCell, the processing unit is further configured to:
determine, based on the first information and the second information, third information corresponding to the N PSCells, wherein the third information comprises one or more of an execution trigger condition and measurement configuration information; and
evaluate, based on the third information, whether execution trigger conditions of the N candidate PSCells are met.

23. The apparatus according to claim 21 or 22, wherein the second configuration information is a second RRC message.

24. A CPC apparatus, comprising:
a transceiver unit, configured to receive and send a message; and
a processing unit, configured to perform the following actions through the transceiver unit:
determine a first message or receive a first message sent by a source secondary base station, wherein the first message comprises identifiers of L candidate PSCells and corresponding first information, and L is a positive integer;
send a second message to at least one candidate secondary base station, wherein the second message is used to request to add a secondary base station;
receive, from the at least one candidate secondary base station, second configuration information corresponding to M candidate PSCells, wherein M is a positive integer, and the second configuration information comprises second information corresponding to N candidate PSCells in the M candidate PSCells; and
send a first RRC reconfiguration message to UE, wherein the first RRC reconfiguration message comprises first information and the second configuration information that correspond to the M candidate PSCells, and the first information and the second information comprise one or more of an execution trigger condition and measurement configuration information.

25. The apparatus according to claim 24, wherein the second configuration information is a second RRC message.

26. A CPC apparatus, comprising:
a transceiver unit, configured to receive and send a message; and
a processing unit, configured to perform the following actions through the transceiver unit:
receive a second message from a primary base station, wherein the second message is used to request to add a secondary base station; and
send a third message to the primary base station, wherein the third message indicates second configuration information corresponding to at least one candidate PSCell, the second configuration information comprises second information corresponding to N candidate PSCells, and the second information comprises one or more of an execution trigger condition and measurement configuration information.

27. The apparatus according to claim 26, wherein the second configuration information is a second RRC message.

28. A communication device, wherein the communication device comprises a transceiver, a processor, and a memory; the memory stores program instructions; and when the program instructions are executed, the communication device is enabled to perform the method according to any one of claims 1 to 8, or the communication device is enabled to perform the method according to any one of claims 9 to 15; or the communication device is enabled to perform the method according to any one of claims 16 to 19.

29. A chip, wherein the chip is coupled to a memory in an electronic device, so that when the chip is run, the chip invokes program instructions stored in the memory, to implement the method according to any one of claims 1 to 8, or implement the method according to any one of claims 9 to 15, or implement the method according to any one of claims 16 to 19.

30. A computer-readable storage medium, wherein the computer-readable storage medium comprises program instructions, and when the program instructions are run on a device, the device is enabled to perform the method according to any one of claims 1 to 19.
